(19) **Europäisches Patentamt / European Patent Office / Office européen des brevets**

(11) **EP 3 956 807 B1**

(12) **EUROPEAN PATENT SPECIFICATION**

(45) Date of publication and mention
of the grant of the patent:
**22.04.2026 Bulletin 2026/17**

(21) Application number: **19726854.3**

(22) Date of filing: **13.05.2019**

(51) International Patent Classification (IPC):
**G06V 40/18** (2022.01)

(52) Cooperative Patent Classification (CPC):
**G06V 40/18; G06N 3/0455; G06N 3/0464;
G06N 3/0475; G06N 3/09; G06N 3/094;
G06N 3/096**

(86) International application number:
**PCT/US2019/032047**

(87) International publication number:
**WO 2020/231401 (19.11.2020 Gazette 2020/47)**

(54) **A NEURAL NETWORK FOR HEAD POSE AND GAZE ESTIMATION USING PHOTOREALISTIC SYNTHETIC DATA**

EIN NEURALES NETZWERK FÜR DIE SCHÄTZUNG DER KOPFHALTUNG UND DES BLICKES UNTER VERWENDUNG PHOTOREALISTISCHER SYNTHETISCHER DATEN

RÉSEAU NEURAL POUR L'ESTIMATION DE POSE DE TÊTE ET DE GAZE À L'AIDE DE DONNÉES SYNTHÉTIQUES PHOTORÉALISTIQUES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**23.02.2022 Bulletin 2022/08**

(73) Proprietor: **Shenzhen Yinwang Intelligent
Technologies Co., Ltd.
Shenzhen, Guangdong 518129 (CN)**

(72) Inventors:
• **YANG, Lei**
**Plano, Texas 75024 (US)**
• **MA, Yuan**
**Plano, Texas 75024 (US)**
• **SHAO, Wenxin**
**Plano, Texas 75024 (US)**
• **HUANG, Wei**
**Plano, Texas 75024 (US)**
• **PORIKLI, Fatih**
**Plano, Texas 75024 (US)**

(74) Representative: **Maiwald GmbH
Elisenhof
Elisenstraße 3
80335 München (DE)**

(56) References cited:
**WO-A1-2018/184140      CN-A- 108 171 218
US-A1- 2018 181 809**

• **FENG YAO ET AL: "Joint 3D Face Reconstruction
and Dense Alignment with Position Map
Regression Network", ROBOCUP 2008:
ROBOCUP 2008: ROBOT SOCCER WORLD CUP
XII; [LECTURE NOTES IN COMPUTER SCIENCE;
LECT.NOTES COMPUTER], SPRINGER
INTERNATIONAL PUBLISHING, CHAM, vol.
11218 Chap.33, no. 558, 9 October 2018
(2018-10-09), pages 557 - 574, XP047500404,
ISBN: 978-3-319-10403-4, [retrieved on 20181009]**
• **XUCONG ZHANG ET AL: "Appearance-Based
Gaze Estimation in the Wild", ARXIV.ORG,
CORNELL UNIVERSITY LIBRARY, 201 OLIN
LIBRARY CORNELL UNIVERSITY ITHACA, NY
14853, 11 April 2015 (2015-04-11), XP081336084,
DOI: 10.1109/CVPR.2015.7299081**

**Description**

FIELD

The disclosure generally relates to training neural networks, and in particular, to a computer-implemented method and device for head pose and gaze angle estimation, a non-transitory computer-readable medium, and computer program product.

BACKGROUND

Driver distraction is increasingly becoming a leading cause of vehicular accidents, particularly with the increased use of technology such as mobile devices, which divert the driver's attention away from the road. Driver distraction monitoring and avoidance is critical in assuring a safe driving environment not only for the distracted driver, but also for other drivers in the vicinity that may be affected by the distracted driver. Vehicles with the ability to monitor a driver allow for measures to be taken by the vehicle to prevent or assist in preventing accidents as a result of the driver being distracted. For instance, warning systems can be enabled to alert the driver that she is distracted or automatic features, such as braking and steering, may be enabled to bring the vehicle under control until such time the driver is no longer distracted. To detect driver distraction, these warning and preventative monitoring systems may use head pose and gaze angles of a driver to evaluate the current status. However, as head and eye movement are typically independent from one another, accurate head pose and gaze estimation is a non-trivial challenge in computer vision technology.

WO 2018/184140 A1 provides techniques for facial image replacement between a reference facial image and a target facial image, of varying pose and illumination, using 3-dimensional morphable face models (3DMMs). A methodology implementing the techniques according to an embodiment includes fitting the reference face and the target face to a first and second 3DMM, respectively. The method further includes generating a texture map based on the fitted 3D reference face and rendering the fitted 3D reference face to a pose of the fitted 3D target face. The rendering is based on parameters of the first 3DMM, parameters of the second 3DMM, and the generated texture map associated with the fitted 3D reference face. The method further includes, determining a region of interest of the target facial image; and blending the rendered 3D reference face onto the region of interest of the target facial image to generate a replaced facial image.

US 2018/181809 A1 discloses a method, computer readable medium, and system for performing unconstrained appearance-based gaze estimation. The method includes the steps of identifying an image of an eye and a head orientation associated with the image of the eye, determining an orientation for the eye by analyzing, within a convolutional neural network (CNN), the image of the eye and the head orientation associated with the image of the eye, and returning the orientation of the eye.

BRIEF SUMMARY

The invention is defined by the attached set of claims. Further details of the disclosed methods and devices are provided in the following, which are helpful for understanding the claimed invention.

According to one aspect of the present invention as defined in independent claim 1, there is provided a computer-implemented method for head pose and gaze angle estimation, comprising training a first neural network with a plurality of two-dimensional (2D) face images in which to decouple movement of the head and eyes of the 2D face, the training of the first network including mapping a 2D face from the plurality of 2D face images to a facial position image, and constructing a facial texture image of the 2D face based on the facial position image; storing an eye texture image, including gaze angles, extracted from the facial texture image of the 2D face in a database; replacing an eye region of the facial texture image with the eye texture image, including the gaze angles, stored in the database to generate a modified facial texture image; reconstructing the modified facial texture image to generate a modified 2D face image, including a modified head pose and gaze angle, as training data and storing the training data in the database; and estimating the head pose and gaze angles by training a second neural network with the training data, the training of the second neural network including collecting the training data from the database, and simultaneously applying one or more transformations to the modified 2D face images and a corresponding eye region of the modified 2D face images of the training data.

Optionally, in any of the preceding aspects, wherein the mapping further includes mapping the 2D face in the plurality of 2D face images to a position map using a face alignment method, where the facial position image aligns the 2D face in the plurality of 2D face images to 3D coordinates of a reconstructed 3D model for the 2D face in the plurality of 2D face images; and the constructing further includes constructing, based on the facial position image or a face 3D morphable model, the facial texture image for the 2D face in the plurality of 2D face images to indicate a texture of the aligned 2D face.

Optionally, in any of the preceding aspects, the storing further includes extracting the facial texture image from the 2D face in the plurality of 2D face images based on the facial position image; cropping the eye region from the facial texture image to create a cropped eye texture image based on landmarks from the aligned 2D face in the plurality of 2D face images; and storing the cropped eye texture image into the database.

Optionally, in any of the preceding aspects, wherein the cropped eye UV texture image is labelled as a difference between the head pose and the gaze angle of the 2D face in the plurality of 2D face images.

Optionally, in any of the preceding aspects, the replacing further includes selecting the eye region from the cropped eye texture image based on the landmarks from the database; and replacing the eye region in the facial texture image with the cropped eye texture image from the database based on aligned coordinates of the landmarks to generate a modified facial texture map of the 2D face in the plurality of 2D face images.

Optionally, in any of the preceding aspects, the replacing further includes applying image fusion to merge the cropped eye texture image selected from the database into the modified facial texture map of the 2D face in the plurality of 2D face images; and training a generative adversarial network (GAN) or using a local gradient information-based method to smooth color and texture in the eye region of the modified facial texture image.

Optionally, in any of the preceding aspects, the computer-implemented method further includes warping the modified facial texture image of the 2D face onto a 3D face morphable model (3DMM) to reconstruct a 3D face model with the gaze direction from the modified facial texture image; applying a rotation matrix to the reconstructed 3D face model to change the head pose, and changing the gaze angles to be consistent with the head pose; projecting the 3D face model after application of the rotation matrix to a 2D image space to generate the modified 2D face image; and storing the modified 2D face image in the database.

Optionally, in any of the preceding aspects, wherein the gaze direction is calculated by adding a relative gaze direction stored in the cropped eye texture image selected from the database to the head pose.

Optionally, in any of the preceding aspects, wherein the estimating further includes collecting 2D face images of a driver of a vehicle with one or more head poses to generate a driver dataset; and applying the driver dataset to fine-tune the second neural network to estimate the head pose and gaze angle estimation of the driver.

Optionally, in any of the preceding aspects, wherein the 2D face images of the driver are captured with a capture device and uploaded to a network for processing; and the processed 2D face images of the driver are downloaded to the vehicle.

Optionally, in any of the preceding aspects, wherein the first neural network is an encoder-decoder type neural network to map the 2D face image to a corresponding position map. Optionally, in any of the preceding aspects, wherein in the facial position image, RGB gray-values at each pixel indicate 3D coordinates of the corresponding facial point in its reconstructed 3D model.

According to still one other aspect of the present invention as defined in independent claim 13, there is a device for head pose and gaze angle estimation, comprising a non-transitory memory storage comprising instructions; and one or more processors in communication with the memory, wherein the one or more processors execute the instructions to train a first neural network with a plurality of two-dimensional (2D) face images in which to decouple movement of the head and eyes of the 2D face, the training of the first network including mapping a 2D face from the plurality of 2D face images to a facial position image, and constructing a facial texture image of the 2D face based on the facial position image; store an eye texture image, including gaze angles, extracted from the facial texture image of the 2D face in a database; replace an eye region of the facial texture image with the eye texture image, including the gaze angles, stored in the database to generate a modified facial texture image; reconstruct the modified facial texture image to generate a modified 2D face image, including a modified head pose and gaze angle, as training data and storing the training data in the database; and estimate the head pose and gaze angles by training a second neural network with the training data, the training of the second neural network including collecting the training data from the database, and simultaneously applying one or more transformations to the modified 2D face images and a corresponding eye region of the modified 2D face images of the training data.

According to still one other aspect of the present invention as defined in independent claim 14, there is a non-transitory computer-readable medium storing computer instructions for head pose and gaze angle estimation, that when executed by one or more processors, cause the one or more processors to perform the steps of training a first neural network with a plurality of two-dimensional (2D) face images in which to decouple movement of the head and eyes of the 2D face, the training of the first network including mapping a 2D face from the plurality of 2D face images to a facial position image, and constructing a facial texture image of the 2D face based on the facial position image; storing an eye texture image, including gaze angles, extracted from the facial texture image of the 2D face in a database; replacing an eye region of the facial texture image with the eye texture image, including the gaze angles, stored in the database to generate a modified facial texture image; reconstructing the modified facial texture image to generate a modified 2D face image, including a modified head pose and gaze angle, as training data and storing the training data in the database; and estimating the head pose and gaze angles by training a second neural network with the training data, the training of the second neural network including collecting the training data from the database, and simultaneously applying one or more transformations to the modified 2D face images and a corresponding eye region of the modified 2D face images of the training data.

This Summary is provided to introduce a selection of concepts in a simplified form that are further described below in the Detailed Description. This Summary is not intended to identify key features or essential features of the claimed invention, nor is it intended to be used as an aid in determining the scope of the claimed invention. The claimed invention is not limited to implementations that solve any or all disadvantages noted in the Background.

BRIEF DESCRIPTION OF THE DRAWINGS

Aspects of the present disclosure are illustrated by way of example and are not limited by the accompanying figures for which like references indicate elements.

FIG. 1A illustrates a system for head pose and gaze estimation.

FIG. 1B illustrates an example head pose and gaze estimator in accordance with FIG. 1A.

FIG. 2A illustrates an example flow diagram for estimating head pose and gaze angles in accordance with embodiments of the disclosure.

FIG. 2B illustrates an example of and origin and coincident head pose and gaze.

FIGS. 2C and 2D illustrate training a neural network for two-dimensional (2D) face data.

FIGS. 3A and 3B illustrate an example of constructing an eye UV texture dataset.

FIGS. 4A and 4B illustrate an example of replacing an eye region in the facial UV texture image.

FIGS. 5A and 5B illustrate an example flow diagram of 3D face reconstruction and training data generation.

FIG. 6 illustrates an example of a multimodal CNN for estimating head pose and gaze angle.

FIGS. 7A and 7B illustrate flow diagrams to fine-tune a pre-trained model.

FIG. 8 illustrates a computing system upon embodiments of the disclosure may be implemented.

DETAILED DESCRIPTION

The present invention will now be described with reference to the figures, which in general relate to a driver behavior detection.

A head pose and gaze estimation technique is disclosed in which the movement of the head is de-coupled from movement of a gaze in a two-dimensional (2D) face image. A face alignment method, such as a deep neural network (DNN)), is used to align the head pose and map the 2D face image from 2D image space to a new UV space. The new UV space is a 2D image plane parameterized from the 3D space and is utilized to express a three-dimensional (3D) geometry (UV position image) and the corresponding texture of the 2D face image (UV texture image). The UV texture image is used to crop eye regions (with different gaze angles) and create a dataset of eye UV texture images in a database. For any 2D face image (for example, a front view face image), the eye region in its UV texture image can be replaced with any image in the eye UV texture dataset stored in the database. The face image is then reconstructed from the UV space to 3D space. A rotation matrix is then applied to the new 3D face and projected back to 2D space to synthesize a large amount of new photorealistic images with different head pose and gaze angles. The photorealistic images are used to train a multimodal convolution neural network (CNN) for simultaneous head pose and gaze angle estimation. The technique may also be applied to other facial attributes, such as expression or fatigue, to generate on datasets related, but not limited to, yawning, eye closure, etc.

The embodiments are provided so that this disclosure will be thorough and complete and will fully convey the inventive concepts to those skilled in the art. Indeed, the disclosure is intended to cover alternatives, modifications and equivalents of these embodiments, which are included within the scope of the invention as defined by the appended claims. Furthermore, in the following detailed description of the present embodiments of the disclosure, numerous specific details are set forth in order to provide a thorough understanding. However, it will be clear to those of ordinary skill in the art that the present invention may be practiced without such specific details.

Data-driven DNN technology has been one of the most remarkable advancements of the last decade, particularly as it relates to computer vision. For DNN training, large datasets with accurate labels is of essential importance. However, there are no readily available large head pose and gaze angle datasets with sufficient amounts of data to perform such training. This is due primarily to the need of an experimental environment in which to collect and acquire the data acquisition. For example, a commonly used dataset is the Columbia gaze dataset, which was collected using a well-designed camera array and a chin rest with a number of fixed head poses. While the Columbia gaze dataset is a good public dataset for algorithm research, it remains insufficient to train a stable gaze and head pose estimation network. An explanation of the Columbia gaze data is disclosed in "Gaze Locking: Passive Eye Contact Detection for Human-Object Interaction," B.A. Smith et al.

As another example, and one of todays most advanced remote gaze analyzers, is the SmartEye Ab® eye tracking system. This system is capable of estimating a person's head pose and gaze accurately and non-invasively. However, it has many shortcomings, including a complicated calibration for the imaging system and only near infrared (NIR) images can be provided for training and testing, the head pose and gaze estimation results are geometric computation-based and very sensitive to the parameter drifting of the imaging system, and the imaging system is very expensive.

Due to the above-mentioned and other limitations of training datasets, head pose and gaze estimation tasks are commonly considered as two separated tasks in the field of computer vision.

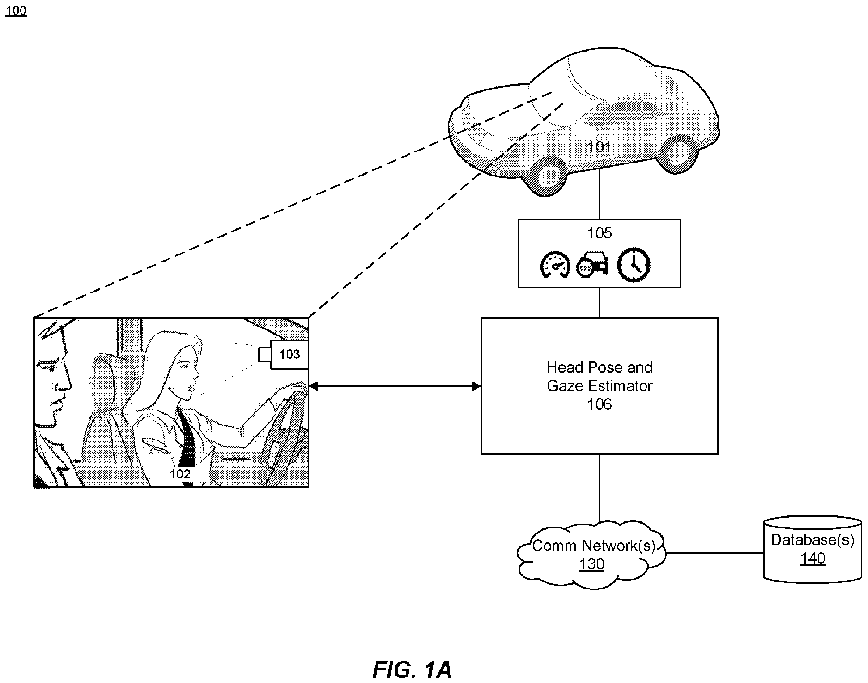

FIG. 1A illustrates a system for head pose and gaze estimation. The head pose and gaze estimator 106 is shown as being installed or otherwise included within a vehicle 101 that also includes a cabin within which a driver 102 can sit. The head pose and gaze estimator 106, or one or more portions thereof, can be implemented by an in-cabin computer system, and/or by a mobile computing device, such as, but not limited to, a smartphone, tablet computer, notebook computer, laptop computer, and/or the like.

In accordance with certain embodiments of the present technology, the head pose and gaze estimator 106 obtains, from one or more sensors, current data for a driver 102 of a vehicle 101. In other embodiments, the head pose and gaze estimator 106 also obtains, from one or more databases 140, additional information about the driver 102 as it relates to features of the driver, such as facial features, historical head pose and eye gaze information, etc. The head pose and gaze estimator 106 analyzes the current data and/or the additional information for the driver 102 of the vehicle 101 to thereby identify a driver's head pose and eye gaze. Such analysis may be performed using one or more computer implemented neural network and/or some other computer implemented model, as explained below.

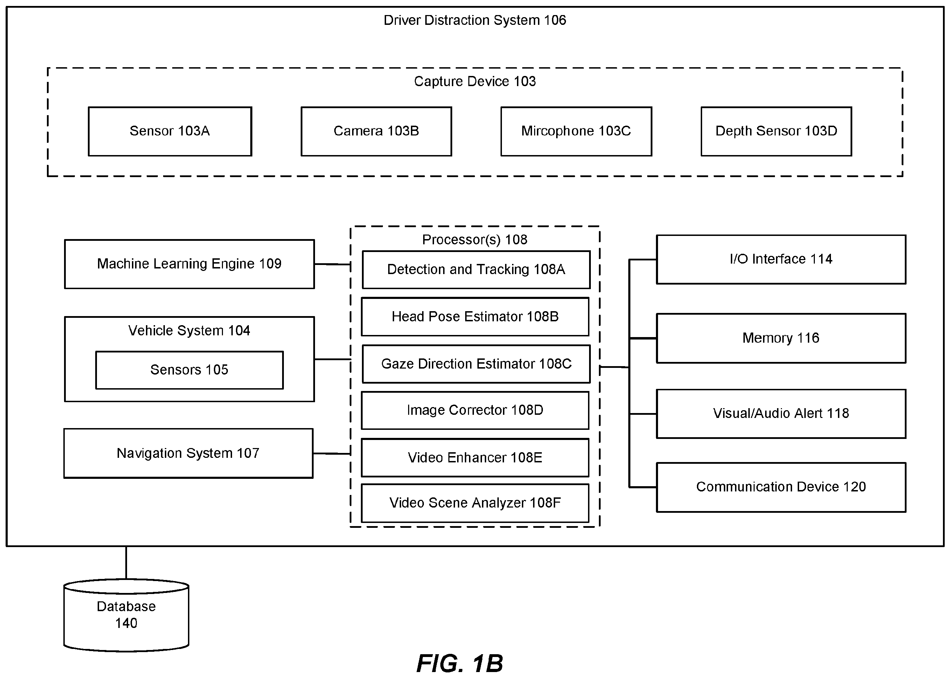

As shown in FIG. 1A, the driver distraction system 106 is communicatively coupled to a capture device 103, which may be used to obtain current data for the driver of the vehicle 101. In one embodiment, the capture device 103 includes sensors and other devices that are used to obtain current data for the driver 102 of the vehicle 101. The captured data may be processed by processor(s) 104, which includes hardware and/or software to detect and track driver movement, head pose and gaze direction. As will be described in additional detail below, with reference to FIG. 1B, the capture device may additionally include one or more cameras, microphones or other sensors to capture data.

In one embodiment, the capture device 103 can be external to the driver distraction system 106, as shown in FIG. 1A, or can be included as part of the driver distraction system 106, depending upon the specific implementation. Additional details of the driver distraction system 106, according to certain embodiments of the present technology, are described below with reference to FIG. 1B.

Still referring to FIG. 1A, the driver distraction system 106 is also shown as being communicatively coupled to various different types of vehicle related sensors 105 that are included within the vehicle 101. Such sensors 105 can include, but are not limited to, a speedometer, a global positioning system (GPS) receiver, and a clock. The driver distraction system 106 is also shown as being communicatively coupled to one or more communication network(s) 130 that provide access to one or more database(s) 140 and/or other types of data stores. The database(s) 140 and/or other types of data stores can store vehicle data for the vehicle 101. Examples of such data include, but are not limited to, driving record data, driving performance data, driving license type data, driver facial features, drive head pose, driver gaze, etc. Such data can be stored within a local database or other data store that is located within the vehicle 101. However, the data is likely stored in one or more database(s) 140 or other data store(s) remotely located relative to the vehicle 101. Accordingly, such database(s) 140 or other data store(s) can be communicatively coupled to the driver distraction system via one or more communication networks(s) 130.

The communication network(s) 130 can include a data network, a wireless network, a telephony network, or any combination thereof. It is contemplated that the data network may be any local area network (LAN), metropolitan area network (MAN), wide area network (WAN), a public data network (e.g., the Internet), short range wireless network, or any other suitable packet-switched network. In addition, the wireless network may be, for example, a cellular network and may employ various technologies including enhanced data rates for global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., worldwide interoperability for microwave access (WiMAX), Long Term Evolution (LTE) networks, code division multiple access (CDMA), wideband code division multiple access (WCDMA), wireless fidelity (Wi-Fi), wireless LAN (WLAN), Bluetooth®, Internet Protocol (IP) data casting, satellite, mobile ad-hoc network (MANET), and the like, or any combination thereof. The communication network(s) 130 can provide communication capabilities between the driver distraction system 106 and the database(s) 140 and/or other data stores, for example, via communication device 102 (FIG. 1B).

While the embodiments of FIG. 1A are described with reference to a vehicle 101, it is appreciated that the disclosed technology may be employed in a wide range of technological areas and is not limited to vehicles. For example, in addition to vehicles, the disclosed technology could be used in virtual or augmented reality devices or in simulators in which head pose and gaze estimations, vehicle data and/or scene information may be required.

Additional details of the driver distraction system 106, according to certain embodiments of the present technology, will now be described with reference to FIG. 1B. The driver distraction system 106 includes a capture device 103, one or more processors 108, a vehicle system 104, a navigation system 107, a machine learning engine 109, an input/output (I/O) interface 114, a memory 116, a visual/audio alert 118, a communication device 120 and database 140 (which may also be part of the driver distraction system).

The capture device 103 may be responsible for monitoring and identifying driver behaviors based on captured driver motion and/or audio data using one or more capturing devices positioned within the cab, such as sensor 103A, camera 103B or microphone 103C. In one embodiment, the capture device 103 is positioned to capture motion of the driver's head and face, while in other implementations movement of the driver's torso, and/or driver's limbs and hands are also captured. For example, the detection and tracking 108A, head pose estimator 108B and gaze direction estimator 108C can monitor driver motion captured by capture device 103 to detect specific poses, such as head pose, or whether the person has is looking in a specific direction.

Still other embodiments include capturing audio data, via microphone 103C, along with or separate from the driver movement data. The captured audio may be, for example, an audio signal of the driver 102 captured by microphone 103C. The audio can be analyzed to detect various features that may vary in dependence on the state of the driver. Examples of such audio features include driver speech, passenger speech, music, etc.

Although the capture device 103 is depicted as a single device with multiple components, it is appreciated that each component (e.g., sensor, camera, microphone, etc.) may be a separate component located in different areas of the vehicle 101. For example, the sensor 103A, the camera 103B, the microphone 103C and the depth sensor 103D may each be located in a different area of the vehicle's cab. In another example, individual components of the capture deice 103 may be part of another component or device. For example, camera 103B and visual/audio 118 may be part of a mobile phone or tablet (not shown) placed in the vehicle's cab, whereas sensor 103A and microphone 103C may be individually located in a different place in the vehicle's cab.

The detection and tracking 108A monitors facial features of the driver 102 captured by the capture device 103, which may then be extracted subsequent to detecting a face of the driver. The term facial features includes, but is not limited to, points surrounding eyes, nose, and mouth regions as well as points outlining contoured portions of the detected face of the driver 102. Based on the monitored facial features, initial locations for one or more eye features of an eyeball of the driver 102 can be detected. The eye features may include an iris and first and second eye corners of the eyeball. Thus, for example, detecting the location for each of the one or more eye features includes detecting a location of an iris, detecting a location for the first eye corner and detecting a location for a second eye corner.

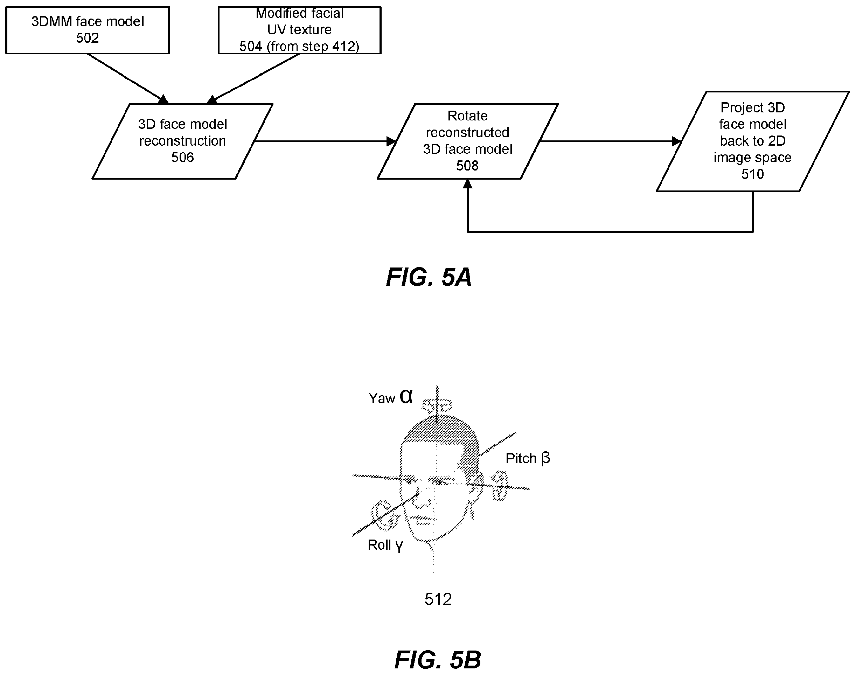

The head pose estimator 108B uses the monitored facial features to estimate a head pose of the driver 102. As used herein, the term "head pose" describes an angle referring to the relative orientation of the driver's head with respect to a plane of the capture device 103. In one embodiment, the head pose includes yaw and pitch angles of the driver's head in relation to the capture device plane. In another embodiment, the head pose includes yaw, pitch and roll angles of the driver's head in relation to the capture device plane. Head pose is described in more detail below with reference to FIG. 5B.

The gaze direction estimator 108C estimates the driver's gaze direction (and gaze angle). In operation of the gaze direction estimator 108C, the capture device 103 may capture an image or group of images (e.g., of a driver of the vehicle). The capture device 103 may transmit the image(s) to the gaze direction estimator 108C, where the gaze direction estimator 108C detects facial features from the images and tracks (e.g., over time) the gaze of the driver. One such gaze direction estimator is the eye tracking system by Smart Eye Ab®.

In another embodiment, the gaze direction estimator 108C may detect eyes from a captured image. For example, the gaze direction estimator 108C may rely on the eye center to determine gaze direction. In short, the driver may be assumed to be gazing forward relative to the orientation of his or her head. In some embodiments, the gaze direction estimator 108C provides more precise gaze tracking by detecting pupil or iris positions or using a geometric model based on the estimated head pose and the detected locations for each of the iris and the first and second eye corners. Pupil and/or iris tracking enables the gaze direction estimator 108C to detect gaze direction de-coupled from head pose. Drivers often visually scan the surrounding environment with little or no head movement (e.g., glancing to the left or right (or up or down) to better see items or objects outside of their direct line of sight). These visual scans frequently occur with regard to objects on or near the road (e.g., to view road signs, pedestrians near the road, etc.) and with regard to objects in the cabin of the vehicle (e.g., to view console readings such as speed, to operate a radio or other in-dash devices, or to view/operate personal mobile devices). In some instances, a driver may glance at some or all of these objects (e.g., out of the corner of his or her eye) with minimal head movement. By tracking the pupils and/or iris, the gaze direction estimator 108C may detect upward, downward, and sideways glances that would otherwise go undetected in a system that simply tracks head position.

In one embodiment, and based on the detected facial features, the gaze direction estimator 108C may cause the processor(s) 108 to determine a gaze direction (e.g., for a gaze of an operator at the vehicle). In some embodiments, the gaze direction estimator 108C receives a series of images (and/or video). The gaze direction estimator 108C may detect facial features in multiple images (e.g., a series or sequence of images). Accordingly, the gaze direction estimator 108C may track gaze direction over time and store such information, for example, in database 140.

The processor 108, in addition to the afore-mentioned pose and gaze detection, may also include a, an image corrector 108D, video enhancer 108E, video scene analyzer 108F and/or other data processing and analytics to determine scene information captured by capture device 103.

Image corrector 108D receives captured data and may undergo correction, such as video stabilization. For example, bumps on the roads may shake, blur, or distort the data. The image corrector may stabilize the images against horizontal and/or vertical shake, and/or may correct for panning, rotation, and/or zoom.

Video enhancer 108E may perform additional enhancement or processing in situations where there is poor lighting or high data compression. Video processing and enhancement may include, but are not limited to, gamma correction, de-hazing, and/or de-blurring. Other video processing enhancement algorithms may operate to reduce noise in the input of low lighting video followed by contrast enhancement techniques, such but not limited to, tone-mapping, histogram stretching and equalization, and gamma correction to recover visual information in low lighting videos.

The video scene analyzer 108F may recognize the content of the video coming in from the capture device 103. For example, the content of the video may include a scene or sequence of scenes from a forward facing camera 103B in the vehicle. Analysis of the video may involve a variety of techniques, including but not limited to, low-level content analysis such as feature extraction, structure analysis, object detection, and tracking, to high-level semantic analysis such as scene analysis, event detection, and video mining. For example, by recognizing the content of the incoming video signals, it may be determined if the vehicle 101 is driving along a freeway or within city limits, if there are any pedestrians, animals, or other objects/obstacles on the road, etc. By performing image processing (e.g., image correction, video enhancement, etc.) prior to or simultaneously while performing image analysis (e.g., video scene analysis, etc.), the image data may be prepared in a manner that is specific to the type of analysis being performed. For example, image correction to reduce blur may allow video scene analysis to be performed more accurately by clearing up the appearance of edge lines used for object recognition.

Vehicle system 104 may provide a signal corresponding to any status of the vehicle, the vehicle surroundings, or the output of any other information source connected to the vehicle. Vehicle data outputs may include, for example, analog signals (such as current velocity), digital signals provided by individual information sources (such as clocks, thermometers, location sensors such as Global Positioning System [GPS] sensors, etc.), digital signals propagated through vehicle data networks (such as an engine controller area network (CAN) bus through which engine related information may be communicated, a climate control CAN bus through which climate control related information may be communicated, and a multimedia data network through which multimedia data is communicated between multimedia components in the vehicle). For example, the vehicle system 104 may retrieve from the engine CAN bus the current speed of the vehicle estimated by the wheel sensors, a power state of the vehicle via a battery and/or power distribution system of the vehicle, an ignition state of the vehicle, etc.

Navigation system 107 of vehicle 101 may generate and/or receive navigation information such as location information (e.g., via a GPS sensor and/or other sensors 105), route guidance, traffic information, point-of-interest (POI) identification, and/or provide other navigational services for the driver. In one embodiment, the navigation system or part of the navigation system is communicatively coupled to and located remote from the vehicle 101.

Input/output interface(s) 114 allow information to be presented to the user and/or other components or devices using various input/output devices. Examples of input devices include a keyboard, a microphone, touch functionality (e.g., capacitive or other sensors that are configured to detect physical touch), a camera (e.g., which may employ visible or non-visible wavelengths such as infrared frequencies to recognize movement as gestures that do not involve touch), and so forth. Examples of output devices include a visual/audio alert 118, such as a display, speakers, and so forth. In one embodiment, I/O interface 114 receives the driver motion data and/or audio data of the driver 102 from the capturing device 103. The driver motion data may be related to, for example, the eyes and face of the driver 102, which may be analyzed by processor(s) 108.

Data collected by the driver distraction system 106 may be stored in database 140, in memory 116 or any combination thereof. In one embodiment, the data collected is from one or more sources external to the vehicle 101. The stored information may be data related to driver distraction and safety, such as information captured by capture device 103. In one embodiment, the data stored in database 140 may be a collection of data collected for one or more drivers of vehicle 101. In one embodiment, the collected data is head pose data for a driver of the vehicle 101. In another embodiment, the collected data is gaze direction data for a driver of the vehicle 101. The collected data may also be used to generate datasets and information that may be used to train models for machine learning, such as machine learning engine 109.

In one embodiment, memory 116 can store instructions executable by the processor(s) 108, a machine learning engine 109, and programs or applications (not shown) that are loadable and executable by processor(s) 108. In one embodiment, machine learning engine 109 comprises executable code stored in memory 116 that is executable by processor(s) 108 and selects one or more machine learning models stored in memory 116 (or database 140). The machine models can be developed using well known and conventional machine learning and deep learning techniques, such as implementation of a convolutional neural network (CNN), described in more detail below.

Applying all or a portion of the collected and obtained data from the various components, the driver distraction system 106 may calculate a level of driver distraction. The level of driver distraction may be based on threshold levels input into the system or based on previously (e.g., historical) collected and obtained information that is analyzed to determine when a driver qualifies as being distracted. In one embodiment, a weight or score may represent the level of driver distraction and be based on information obtained from observing the driver, the vehicle and/or the surrounding environment. These observations may be compared against, for example, the threshold levels or previously collected and obtained information. For example, in bad weather or during rush hour or at night, the route may require a higher level of driver attention than portions of the route in the surrounding environment during good weather, non-rush hour and during the day. These portions be deemed as safe driving areas where lower levels of driver distraction are likely to occur, and distracted driving areas where higher levels of driver distraction are likely to occur. In another example, drivers may require a higher level of attention while traveling along a winding road or a highway than would be required while traveling along a straight road or a cul-de-sac. In this case, drivers traveling along the winding road or highway may have portions of the route with higher levels of driver distraction, whereas drivers traveling along a straight road or a cul-de-sac may have portions of the route of lower levels of driver distraction.

Other examples include calculating a driver distraction score when the driver is gazing forward (e.g., as determined from the internal image) versus when the driver is gazing downward or to the side. When the driver is deemed to being gazing forward, the associated score (and level of distraction) would be deemed lower than when the driver is gazing downward or to a side. Numerous other factors may be considered when calculating a score, such as how noisy the cabin of the vehicle may be (e.g., based on detected audible information) or gazing in a direction in which a hazardous or unsafe object is obstructed but otherwise detectable by the vehicle sensors (e.g., determined from vehicle proximity sensors, the external image, etc.). IT is appreciated that other driver distraction scores may be calculated provided any other suitable set of inputs.

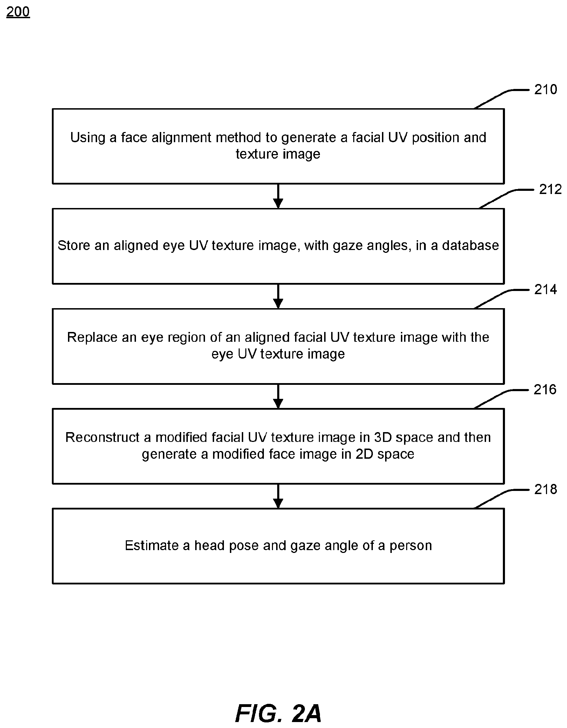

FIG. 2A illustrates an example flow diagram for estimating head pose and gaze angles in accordance with embodiments of the disclosure. In embodiments, the flow diagrams may be computer-implemented methods performed, at least partly, by hardware and/or software components illustrated in the various figures and as described herein. In one embodiment, the disclosed process may be performed by the head pose and gaze estimator 106 disclosed in FIGS. 1A and 1B. In one embodiment, software components executed by one or more processors, such as processor(s) 108 or processor 802, perform at least a portion of the process.

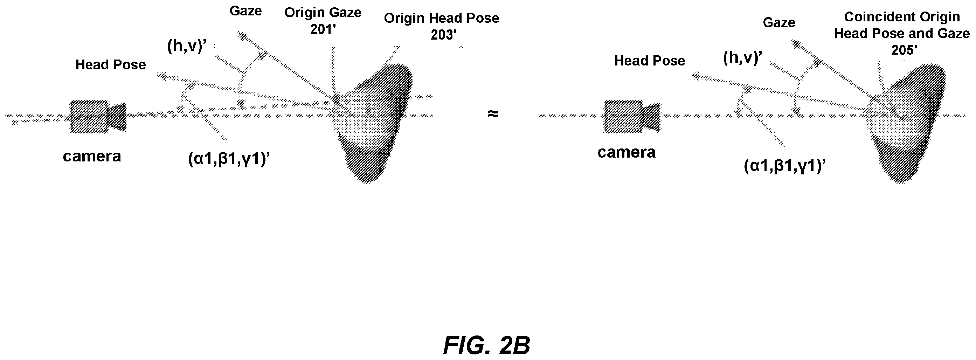

Process 200 estimates a head pose and gaze angle of a person, for example, a driver of a vehicle. Steps 210 - 216 relate to the generation of a dataset with accurate head pose and gaze angle labels, which will be used in step 218 to train a multimodal CNN for head pose and gaze angle estimation. For purposes of calculating the head pose and gaze estimation, the head pose of a person has a yaw, pitch and roll $(\alpha, \beta, \gamma)$ equal to $(0°, 0°, 0°)$ when the head faces frontward toward a capture device 103, such as a camera 103B, as shown in FIG. 2B. In one embodiment, when an image of a two-dimensional (2D) face (i.e., a facial image) of the person is captured by the camera 103B, the gaze angle of the person's eyes will be determined by the position of the pupil centers with respect to the corners of the eyes.

Based on this assumption, the persons head may be aligned using different poses such that movement of the head (pose) may be de-coupled from the eyes (gaze). In one embodiment by changing the position of the pupil centers (with respect to the corners of the eyes) in the aligned image, the gaze angles can also be changed when reconstructing the 2D image, as explained below. In making these determinations, the origins of the head pose and gaze coordinates are coincident, as shown in FIG. 2B. According to the embodiment, the origin gaze 201' and origin head pose 203' are shown as two separate dotted lines, where the gaze angle is (h,v)' and the head pose angle has the three rotation angles of yaw, pitch and roll $(\alpha_1, \beta_1, \gamma_1)'$. The origin gaze 201' and origin head pose 203' coordinates (e.g., (h,v)' and $(\alpha_1, \beta_1, \gamma_1)'$) are equivalent (or nearly equivalent) to the coincident origin head pose and gaze 205' (i.e., the head pose and gaze are shown as a single dotted line).

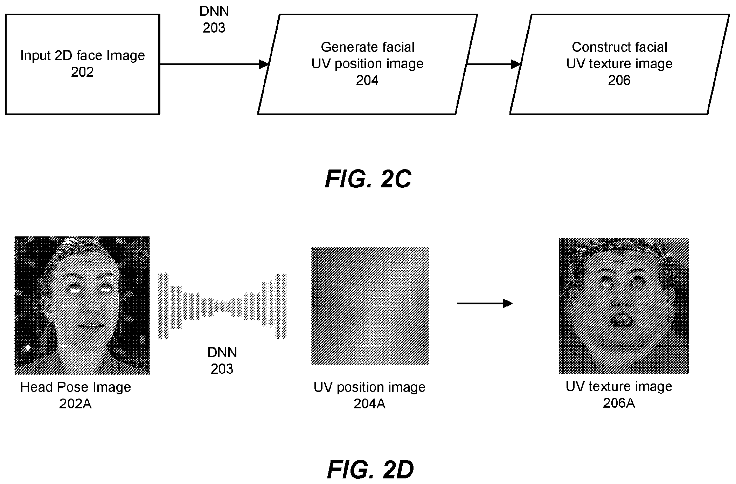

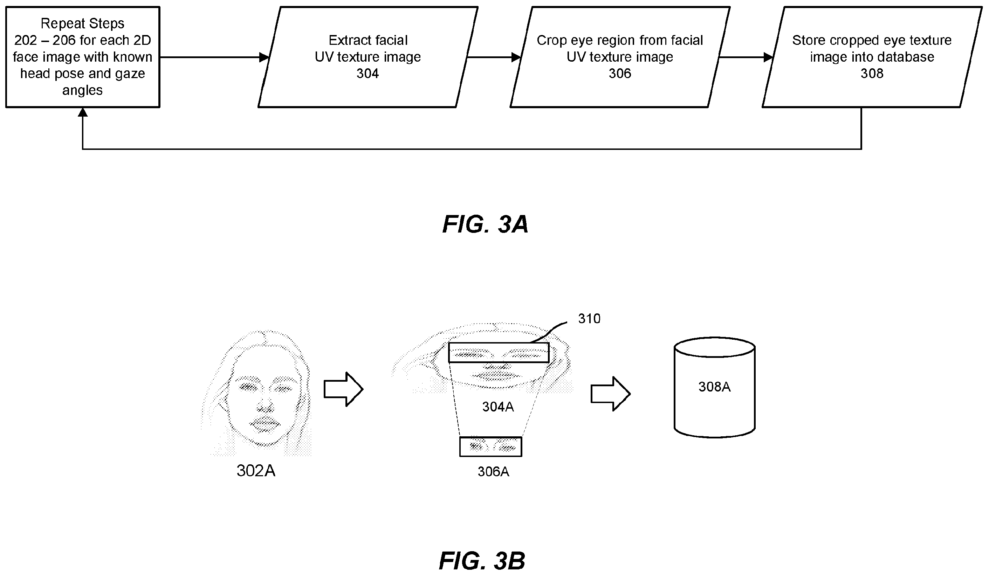

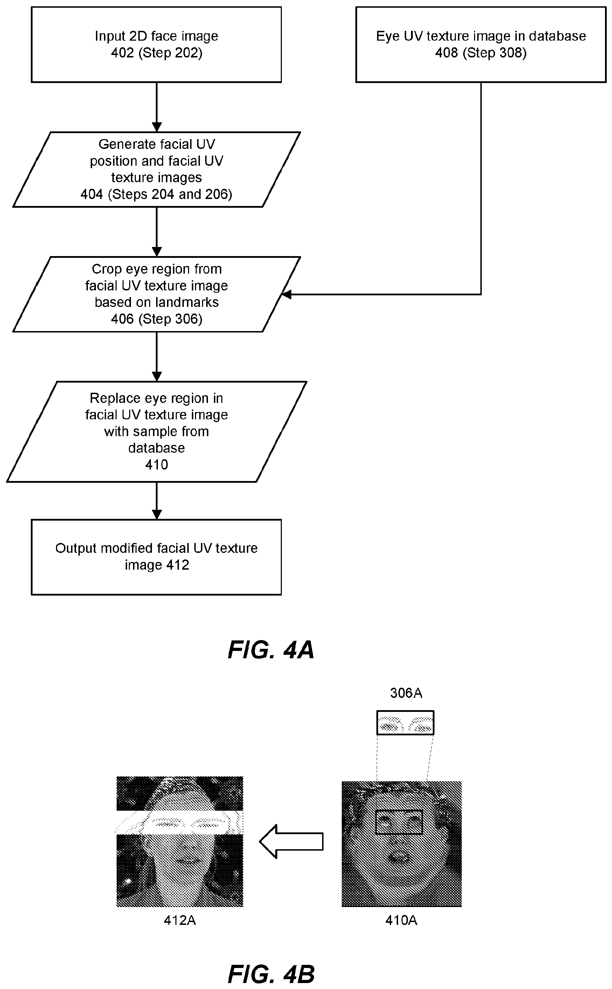

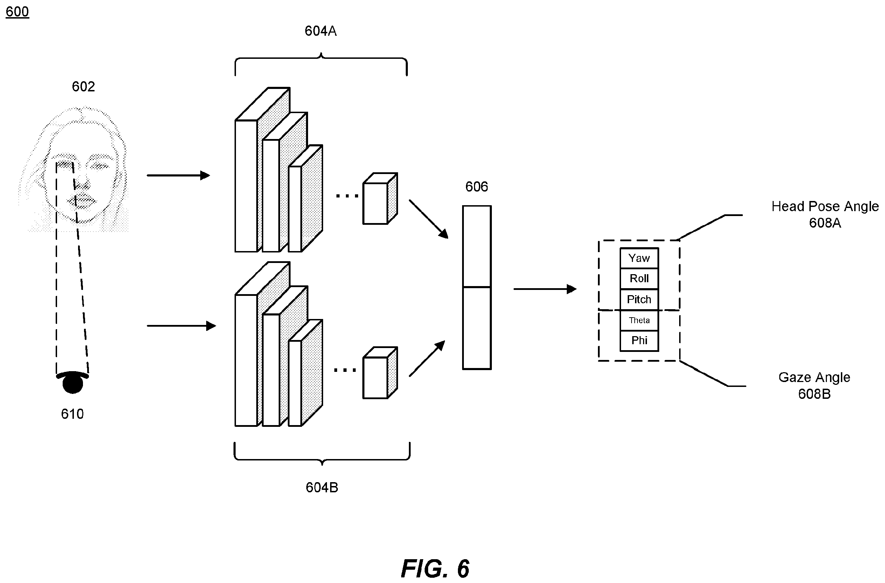

Based on the above assumptions, at step 210, a face alignment method, such as an encoder-decoder deep neural network (DNN), is trained with an image of the 2D face to generate an aligned facial UV position image and facial UV texture image of the 2D face in which to decouple movement of the head and eyes of the 2D face, as described below with reference to FIGS. 2C and 2D. An eye UV texture image, including gaze angles, is then extracted from the facial UV texture image of the 2D face and stored in a database, at step 212 (FIGS. 3A and 3B). An eye region of the facial UV texture image is replaced with the eye UV texture image, including the gaze angles, retrieved from the database at 214 (FIGS. 4A and 4B). Replacing the eye region with the eye UV texture image generates a modified facial UV texture image. At step 216, the modified facial UV texture image is reconstructed to generate a modified 2D face image, including a modified head pose and gaze angle, as training data stored in the database (FIGS. 5A and 5B), and the head pose and gaze angles of a person is estimated at step 218 by training a CNN with the training data (FIG. 6). A detailed explanation of each step is found in the description below with reference to the corresponding figures.

FIGS. 2C and 2D illustrate an example of training a neural network for two-dimensional (2D) face alignment. The training of a neural network in the depicted embodiments is a detailed description of the training step 210 of FIG. 2A. With reference to FIG. 2C, a 2D image of a face 202 is input into a deep neural network (DNN) 203, such as an encoder-decoder type DNN (or face alignment network), where the machine learning engine 109 aligns the 2D face image into a facial UV position image (or position map) 204 and constructs a facial UV texture image (or texture map) 206. That is, the facial UV position image 204 represents a full 3D facial structure of the 2D image that records 3D positions of all points in UV space while maintaining a dense correspondence to the semantic meaning of each point in UV space. As appreciated by the skilled artisan, UV space (or UV coordinates) is a 2D image plane parameterized from 3D space that may be used to express the 3D geometry (i.e., facial UV position image 204) and the corresponding texture of the face (i.e., facial UV texture image 206), where "U" and "V" are the axes of the image plane (since "X," "Y" and "Z" are used as coordinates in 3D space). In one embodiment, the dataset used to train the DNN 203 is a public dataset, such as the 300W-LP (large pose) dataset. While the example refers to a neural network, it is appreciated that other face alignment methods can be used to generate the facial UV position image (or position map) 204 and then construct the corresponding facial UV texture image 206.

In one example, the 2D image is a head pose image 202A depicted in FIG. 2D that is processed by the encoder-decoder type DNN 203. For the head pose image 202A, the encoder-decoder type DNN 203 aligns the head (face) and maps the face image from 2D image space to the corresponding UV space. This results in the 2D image plane parameterized from the 3D space to express the corresponding 3D geometry (facial UV position image 204A) and the texture of the face (facial UV texture image 206A). Accordingly, movement of the head and eyes are separated such that the head pose (facial UV position image) and gaze direction (facial UV texture image) are de-coupled from one another.

In one embodiment, the above generation of the UV position image and UV texture map is implemented according to the "Joint 3D Face Reconstruction and Dense Alignment with Position Map Regression Network" by Feng et al. However, it is appreciated that any different number of known face alignment techniques may be used to generate the facial UV position image and facial UV texture image from the head pose image.

FIGS. 3A and 3B illustrate an example of constructing an eye UV texture dataset. The construction of the eye UV texture dataset in the depicted embodiments is a detailed description of step 212 of FIG. 2. Referring to FIGS. 3A and 3B, a head pose image (with a known head pose and gaze angle) is input into DNN 203, where steps 202 - 206 may be repeated for each head pose image. For example, head pose image 302A is input into DNN 203. As explained above, inputting the head pose image 302A into DNN 203 generates an aligned facial UV position image and facial UV texture image. The facial UV texture image 304A may then be extracted from the generated information at step 304. For example, facial UV texture image 304A is extracted from DNN 203 after processing the input head pose image 302A. Using the extracted facial UV texture image 304A from step 304, an eye region 310 may be cropped from the facial UV texture image 304A at step 306 to generate eye UV texture image 306A.

In one embodiment, cropping the eye region from the extracted facial UV texture image 304A is based on aligned facial landmarks (described below) determined during the facial alignment performed by DNN 203. For example, for a 2D image (i.e., head pose image) with a known head pose having angles $(\alpha_1, \beta_1, \gamma_1)'$ and a gaze having angles $(h,v)'$, described above with reference to FIG. 2B, the difference between the head pose angles and the gaze angles will be calculated as the eye UV texture image 306A in which the eyes have been cropped. More specifically, if the 2D face image has 3D head pose Euler angles *Yaw, Pitch* and *Roll,* such that $H = (\alpha_1, \beta_1, \gamma_1)'$ and gaze Euler angles *Yaw* and *Pitch,* such that G = $(h,v)'$, the difference can be calculated as

$$\mathbf{\Delta} = (\theta, \varphi)' = (h - \alpha_1, v - \beta_1)' \qquad \dots \qquad (1).$$

Each of the eye UV texture images 306A, from each of the input 2D face images, may then be used to construct the eye UV texture dataset for storage in a database, such as database 308A, at step 308. The stored eye UV texture dataset may be retrieved for subsequent processing in order to replace an eye region of a facial UV texture image with one from the database 308. In one embodiment, the eye UV texture database is constructed using any 2D face image dataset with known head pose and gaze angles, such as the Columbia gaze dataset.

FIGS. 4A and 4B illustrate an example of replacing an eye region in the facial UV texture image. The replacement of an eye region in the facial UV texture image of the depicted embodiments is a detailed description of step 214 of FIG. 2. Prior to replacing the eye region in the facial UV texture with the eye UV texture image selected from the eye UV texture image dataset stored in database 308A, a 2D face image with a known head pose $(\alpha_2, \beta_2, \gamma_2)'$ (for example a front view face image in which $(\alpha_2, \beta_2, \gamma_2)' = (0°, 0°, 0°)$) is input into DNN 203 to obtain an aligned facial UV position image 204A and facial UV texture image 206A at steps 402 and 404 (corresponding to steps 202 - 206 in FIG. 2C).

At step 406 (corresponding to step 306 in FIG. 3A), an eye region 310 is then cropped from the aligned facial UV texture image 304A based on the UV space (coordinates) of eye landmarks. The UV space of the eye landmarks used to crop the eye region 310 are directly determined by DNN 203 during the generation of the UV position image 204A and UV texture image 206A. In one embodiment, the UV space of the eye landmarks may be determined using any number of different well-known facial alignment or facial landmark localization techniques, such as but not limited to regression techniques, active appearance models (AAM), active shape models (ASM), constrained local models (CLM), mnemonic descent method and cascaded auto-encoders, cascaded CNNs, generative adversarial network (GAN), etc.

The eye region 310 cropped from the facial UV texture image in step 404 is then replaced with an eye region 310 with an eye UV texture selected from the database 308A storing the eye UV textures, as detailed above with reference to FIGS. 3A and 3B. For example, the cropped eye region 306A is selected from the eye UV texture image in database 308A at step 408 (corresponding to step 308 in FIG. 3A) and replaces the eye region of the facial UV texture image 410A, as shown in FIG. 4B. The resulting image is a modified facial UV texture map 412A that is output for processing at steps 502 - 506 of FIG. 5A.

In one other embodiment, replacing the eye region 310 of the facial UV texture image 410A is accomplished using Gaussian mixture image compositing. It is appreciated that any number of different eye region replacement techniques may be employed, as readily appreciated by the skilled artisan.

In some embodiment, replacing the eye region of the facial UV texture image with an eye UV texture image from the database 308A causes at least some visual discontinuity in color distributions and/or textures due to different imaging conditions between the currently input 2D face image at step 402 and the selected eye UV texture image 306A from database 308A. To absolve this visual discontinuity, a gradient-based image fusion algorithm may be used to merge the selected eye UV texture image 306A into the aligned facial UV texture image 410A. For example, the image fusion technique may use the gradient-based approach to preserve important local perceptual cues while at the same time avoid traditional problems such as aliasing, ghosting and haloing. One example of such a technique is described in "Image Fusion for Context Enhancement and Video Surrealism" to Raskar et al., which may be used to merge (fuse) the two images. In one further embodiment, a generative adversarial network (GAN) can be trained to smoothly modify the local color/texture details in the eye region in order to perform the replacement step. That is, the GAN may improve the realism of images from a simulator using unlabeled real data, while preserving annotation information.

FIGS. 5A and 5B illustrate an example flow diagram of 3D face reconstruction and training data generation. The 3D face reconstruction and training data generation in the depicted embodiments is a detailed description of step 216 of FIG. 2. After outputting the modified UV texture image for a 2D face image (step 412 of FIG. 4A), a dataset (e.g., a 2D photorealistic synthetic dataset) may be generated by reconstructing a 3D face model, rotating the reconstructed 3D face model and projecting the rotated 3D face model back to a 2D image space, as explained below with reference to steps 502 - 510.

At step 506, the modified facial UV texture 412A at step 504 (corresponding to step 412 of FIG. 4A) is warped onto a 3D face morphable model (3DMM) of step 502 to reconstruct a 3D face model 512 of the person's head with a modified gaze direction, as shown in FIG. 5B. In one embodiment, a 2D face image, such as 2D face image 202A (FIG. 2D), is fit to a 3DMM by modeling the 3D face shape with a linear subspace (using a principal component analysis (PCA) or Tensor) and achieves such fit by minimizing the difference between the image and the model appearance. In one variation, a regression based 3DMM fitting may be applied such that the model parameters are estimated by regressing the features at landmark positions. Examples of warping 2D face images onto a 3DMM may be found in "Face alignment across large poses: a 3D solution" by Zhu et al. and "Appearance-based gaze estimation in the wild" by Zhang et al.

While a facial UV position image may be used to reconstruct the 3D face model 512, other techniques may also be utilized. For example, the 3D dense face alignment (3DDFA) framework can also be used to reconstruct the 3D face model 512. In another example, a face alignment technique may be used to reconstruct the 3D face model 512. Such a technique is described in "How far are we from solving the 2d & 3d face alignment problem? (and a dataset of 230,000 3d facial landmarks)" to Bulat et al.

After reconstruction, a rotation matrix R is then applied to the reconstructed 3D face model 512 in order to change the person's head pose at step 508. Changing the head pose also changes the gaze angle of the person's eyes as the reconstructed 3D face model is considered a rigid object. After rotation, the 3D face model 512 is projected back to 2D image space at step 510. It is appreciated that other projection techniques may be applied in step 510. For example, the 3D face model 512 may be directly projected to a 2D plane and artificial backgrounds added thereto. In another example, a 3D image meshing method to rotate the head and project the 3D head back to 2D may be employed. Such a technique is disclosed in "Face alignment across large poses: a 3D solution" to Zhu et al.

In one embodiment, the generated 2D face image has a known head pose $(\alpha 2 + \alpha 3, \beta 2 + \beta 3, \gamma 2 + \gamma 3)$ based on the rotation matrix R, and the gaze direction $(\alpha 2 + \alpha 3 + \theta, \beta 2 + \beta 3 + \varphi)$ can be obtained by adding the relative gaze direction of the selected eye UV texture image from the database 308A to the head pose. For example, when $(\alpha=0, \beta 3=0, \gamma 3=0)$, the gaze angle will be changed to $(\alpha 2 + \theta, \beta 2 + \varphi)'$ while the head pose will remain the same.

With reference to FIG. 5B, if the 3 Euler angles (yaw, pitch and roll) of the rotation applied to the reconstructed 3D face model 512 is $(\alpha_3, \beta_3, \gamma_3)$, then the rotation matrix R can be written as:

$$R = R_y(\alpha_3)R_x(\beta_3)R_z(\gamma_3) \quad \dots \quad (2),$$

where

$$R_y(\alpha_3) = \begin{bmatrix} \cos\alpha_3 & 0 & \sin\alpha_3 \\ 0 & 1 & 0 \\ -\sin\theta\alpha_3 & 0 & \cos\theta\alpha_3 \end{bmatrix}$$

$$R_x(\beta_3) = \begin{bmatrix} 1 & 0 & 0 \\ 0 & \cos\beta_3 & -\sin\beta_3 \\ 0 & \sin\beta_3 & \cos\beta_3 \end{bmatrix}$$

$$R_z(\gamma_3) = \begin{bmatrix} \cos\gamma_3 & \sin\gamma_3 & 0 \\ -\sin\gamma_3 & \cos\gamma_3 & 0 \\ 0 & 0 & 1 \end{bmatrix}.$$

The three matrices represent the basic rotation matrix about X, Y and Z axis, as illustrated. For any point $V = [x, y, z]^T$ on the 3D face model, after rotation, the point V becomes

$$V' = \begin{bmatrix} x' \\ y' \\ z' \end{bmatrix} = RV = R_y(\alpha_3)R_x(\beta_3)R_z(\gamma_3)\begin{bmatrix} x \\ y \\ z \end{bmatrix} \quad \dots \quad (3).$$

After rotation, the new head pose can be computed as:

$$H' = (\alpha_2 + \alpha_3, \beta_2 + \beta_3, \gamma_2 + \gamma_3) \quad \dots \quad (4),$$

and the gaze angle can be calculated as:

$$G' = (\alpha_2 + \alpha_3 + \theta, \beta_2 + \beta_3 + \varphi) \quad \dots \quad (5).$$

To project the 3D face model 512 after rotation back to 2D image space at step 510, a camera intrinsic matrix is applied to the 3D face model 512 according to:

$$s\begin{bmatrix} u \\ v \\ 1 \end{bmatrix} = \begin{bmatrix} f_x & 0 & c_x \\ 0 & f_y & c_y \\ 0 & 0 & 1 \end{bmatrix}\begin{bmatrix} x' \\ y' \\ z' \end{bmatrix},$$

where $[x',y',z']^T$ is the new 3D space (coordinates) after rotation, $f_x$ and $f_y$ are the focal lengths expressed in pixel units, $(c_x, c_y)$ is a principal point that is typically at the image center, $s$ is the scale factor and $[u, v]^T$ is the coordinates of the corresponding point on the 2D image.

To generate a dataset of 2D face images (e.g., the 2D photorealistic synthetic dataset) with head pose and gaze angles, the rotation operation at step 508 is repeated for each 3D face model reconstructed from the 3DMM face model and modified facial UV texture. The resulting dataset may then be stored as the 2D photorealistic synthetic dataset, for example, in a database.

FIG. 6 illustrates an example of a multimodal CNN for estimating head pose and gaze angle. The CNN 600 for simultaneous estimation of head pose and gaze angle in the depicted embodiments is a detailed description of step 218 of FIG. 2A. The CNN 600 will be trained end-to-end using the 2D photorealistic synthetic dataset generated during step 510 of FIG. 5A. As illustrated, the CNN 600 receives two inputs: a 2D face image 602 and an eye region 610 of the 2D face image 602. Each of the inputs is passed to separately stacked convolution layers 604A and 604B, where batch normalization and activation functions may be applied. For example, in one embodiment, each convolutional layer 604A and 604B is followed by a batch normalization (BN) layer (not shown). Each convolutional layer 604A and 604B simultaneously extracts deeper features based on input features provided by the previous layer and automatically learn task related feature representations of the 2D face image 602 and eye region 610. The extracted features (i.e., head pose and gaze) from each input are flattened and merged for input into the fully connected layers 606 in which to estimate the head pose angle 608A (e.g., yaw, roll, pitch) and gaze angle 608B (e.g., theta, phi) of the 2D face image input from the 2D photorealistic synthetic dataset. In one embodiment, processing the inputs in the manner described above may also be referred to as applying transformations to the input data. More generally, as the input data is processed by the CNN 600, transformations are applied at different layers of the network. These transformations may be linear transformations, statistical standardization or other mathematical functions. Non-limiting examples of transformation include mirroring, rotating, smoothing, contrast reduction, and the like that may be applied to the input data.

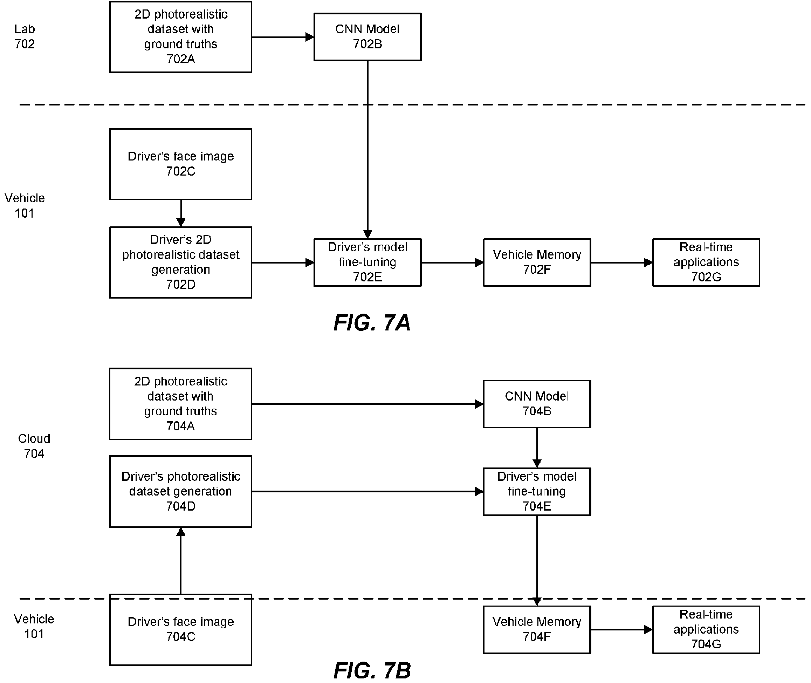

FIGS. 7A and 7B illustrate flow diagrams to fine-tune a pre-trained model. In one embodiment, and with reference to FIG. 7A, a driver 102 in a vehicle 101 (FIG. 1) can provide images with the driver's head pose to fine-tune the CNN model. A dataset 702A (e.g., 2D photorealistic synthetic dataset), generated according to the aforementioned steps, is used to train a CNN, such as CNN 600, in the lab 702 (or any other location in which a processing device is located). The trained CNN model 702B may be stored, for example, into vehicle memory 702F of vehicle 101. The driver 102 of the vehicle 101 will have 2D face images 702C captured. In real applications, such as real-time applications 702G, in order to preserve more details of the driver's facial texture, the subject's front view face images will be captured as much as possible. The 2D face images of the driver 102 may be taken by a capturing device 103 within the vehicle 101. The capturing device 103 may be part of the vehicle, such as a sensor 103A or camera 103B, depth sensor 103D, or place in the vehicle, such as a mobile phone or tablet. In one embodiment, the 2D face images are captured while the driver 102 is driving the vehicle 101. In another embodiment, the 2D face images are captured while the vehicle 101 is parked or in a non-moving state. The captured 2D face images of the driver may then be used to generate a driver dataset 702D (e.g., a driver 2D photorealistic dataset) using the aforementioned steps (e.g., the steps in FIGS. 2A - 6). In one embodiment, the driver dataset 702D may be stored in the vehicle memory 702F. The driver dataset 702D will be applied to fine-tune the CNN model 702B for a more accurate head pose and gaze angle estimation for the driver 102 and for use during real-time application 702G, such as during driving the vehicle 101.

In one other embodiment, and with reference to FIG. 7B, a driver 102 of a vehicle 101 (FIG. 1) can provide images with the driver's head pose to fine-tune the CNN model. Unlike the embodiment of FIG. 7A, the driver 102 can capture 2D face images 704C prior to driving the vehicle 101. In real applications, such as real-time applications 704G, in order to preserve more details of the driver's facial texture, the subject's front view face images will be captured as much as possible. In one embodiment, a capturing device 103, such as camera 103B, depth sensor 103D or a mobile phone or tablet, may be used to capture the 2D face images 704C. The captured 2D face images 704C can then be uploaded to the cloud 704 where a dataset 704D (e.g., 2D photorealistic synthetic dataset) may be generated with different pose and gaze angles for the driver 102 (based on different 2D face images being uploaded) according to the steps in FIGS. 2A - 6). In cloud 704, a CNN model 704B is pre-trained using a large dataset 704A (which may be saved in a database) generated according to the steps in FIGS. 2A - 6) with different subjects, such as CNN 600. Subsequently, the driver dataset 704D will be applied to fine-tune the pre-trained CNN model 704B for a more accurate head pose and gaze angle estimation for the driver 102. The fine-tuned CNN model 704E may be downloaded to the vehicle 101 and stored, for example, into vehicle memory 704F and for use during real-time application 704G, such as during driving the vehicle 101.

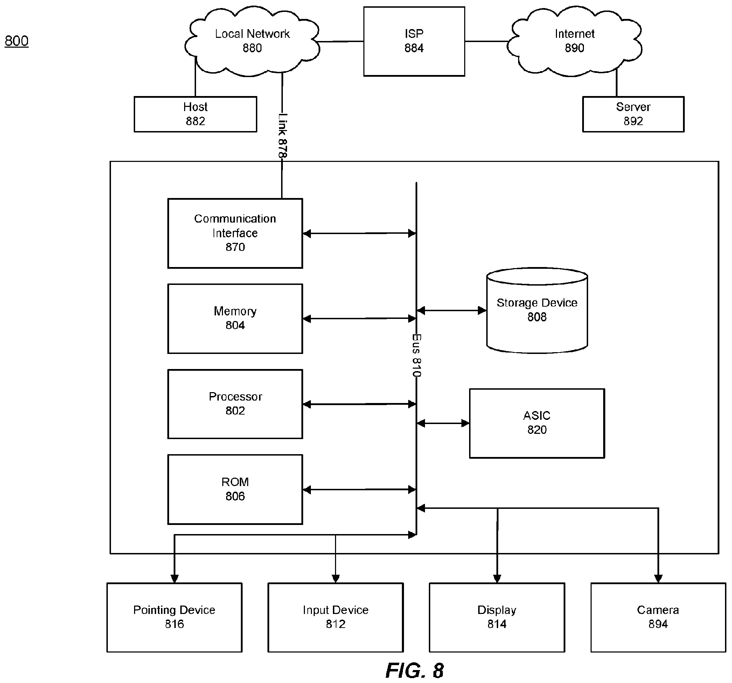

FIG. 8 illustrates a computing system upon embodiments of the disclosure may be implemented. Computing system 800 may be programmed (e.g., via computer program code or instructions) to provide enhanced safety to drivers using driver behavior detection as described herein and includes a communication mechanism such as a bus 810 for passing information between other internal and external components of the computer system 800. In one embodiment, the computer system 800 is system 100 of FIG. 1A. Computer system 800, or a portion thereof, constitutes a means for performing one or more steps for providing enhanced safety to drivers using the driver behavior detection.

A bus 810 includes one or more parallel conductors of information so that information is transferred quickly among devices coupled to the bus 810. One or more processors 802 for processing information are coupled with the bus 810.

One or more processors 802 performs a set of operations on information (or data) as specified by computer program code related to for provide enhanced safety to drivers using driver behavior detection. The computer program code is a set of instructions or statements providing instructions for the operation of the processor and/or the computer system to perform specified functions. The code, for example, may be written in a computer programming language that is compiled into a native instruction set of the processor. The code may also be written directly using the native instruction set (e.g., machine language). The set of operations include bringing information in from the bus 810 and placing information on the bus 810. Each operation of the set of operations that can be performed by the processor is represented to the processor by information called instructions, such as an operation code of one or more digits. A sequence of operations to be executed by the processor 802, such as a sequence of operation codes, constitute processor instructions, also called computer system instructions or, simply, computer instructions.

Computer system 800 also includes a memory 804 coupled to bus 810. The memory 804, such as a random access memory (RAM) or any other dynamic storage device, stores information including processor instructions for providing enhanced safety to drivers using driver behavior detection. Dynamic memory allows information stored therein to be changed by the computer system 800. RAM allows a unit of information stored at a location called a memory address to be stored and retrieved independently of information at neighboring addresses. The memory 804 is also used by the processor 802 to store temporary values during execution of processor instructions. The computer system 800 also includes a read only memory (ROM) 806 or any other static storage device coupled to the bus 810 for storing static information. Also coupled to bus 810 is a non-volatile (persistent) storage device 808, such as a magnetic disk, optical disk or flash card, for storing information, including instructions.

In one embodiment, information, including instructions for providing enhanced safety to distracted drivers using the head pose and gaze estimator, is provided to the bus 810 for use by the processor from an external input device 812, such as a keyboard operated by a human user, a microphone, an Infrared (IR) remote control, a joystick, a game pad, a stylus pen, a touch screen, head mounted display or a sensor. A sensor detects conditions in its vicinity and transforms those detections into physical expression compatible with the measurable phenomenon used to represent information in computer system 800. Other external devices coupled to bus 810, used primarily for interacting with humans, include a display device 814 for presenting text or images, and a pointing device 816, such as a mouse, a trackball, cursor direction keys, or a motion sensor, for controlling a position of a small cursor image presented on the display 814 and issuing commands associated with graphical elements presented on the display 814, and one or more camera sensors 884 for capturing, recording and causing to store one or more still and/or moving images (e.g., videos, movies, etc.) which also may comprise audio recordings.

In the illustrated embodiment, special purpose hardware, such as an application specific integrated circuit (ASIC) 820, is coupled to bus 810. The special purpose hardware is configured to perform operations not performed by processor 802 quickly enough for special purposes.

Computer system 800 also includes a communications interface 870 coupled to bus 810. Communication interface 870 provides a one-way or two-way communication coupling to a variety of external devices that operate with their own processors. In general the coupling is with a network link 878 that is connected to a local network 880 to which a variety of external devices, such as a server or database, may be connected. Alternatively, link 878 may connect directly to an Internet service provider (ISP) 884 or to network 890, such as the Internet. The network link 878 may be wired or wireless. For example, communication interface 870 may be a parallel port or a serial port or a universal serial bus (USB) port on a personal computer. In some embodiments, communications interface 870 is an integrated services digital network (ISDN) card or a digital subscriber line (DSL) card or a telephone modem that provides an information communication connection to a corresponding type of telephone line. In some embodiments, a communication interface 870 is a cable modem that converts signals on bus 810 into signals for a communication connection over a coaxial cable or into optical signals for a communication connection over a fiber optic cable. As another example, communications interface 870 may be a local area network (LAN) card to provide a data communication connection to a compatible LAN, such as Ethernet. Wireless links may also be implemented. For wireless links, the communications interface 870 sends and/or receives electrical, acoustic or electromagnetic signals, including infrared and optical signals, which carry information streams, such as digital data. For example, in wireless handheld devices, such as mobile telephones like cell phones, the communications interface 870 includes a radio band electromagnetic transmitter and receiver called a radio transceiver. In certain embodiments, the communications interface 870 enables connection to a communication network for providing enhanced safety to distracted drivers using the head pose and gaze estimator to mobile devices, such as mobile phones or tablets.

Network link 878 typically provides information using transmission media through one or more networks to other devices that use or process the information. For example, network link 878 may provide a connection through local network 880 to a host computer 882 or to equipment 884 operated by an ISP. ISP equipment 884 in turn provide data communication services through the public, world-wide packet-switching communication network of networks now commonly referred to as the Internet 890.

A computer called a server host 882 connected to the Internet hosts a process that provides a service in response to information received over the Internet. For example, server host 882 hosts a process that provides information representing video data for presentation at display 814. It is contemplated that the components of system 800 can be deployed in various configurations within other computer systems, e.g., host 882 and server 882.

At least some embodiments of the disclosure are related to the use of computer system 800 for implementing some or all of the techniques described herein. According to one embodiment of the disclosure, those techniques are performed by computer system 800 in response to processor 802 executing one or more sequences of one or more processor instructions contained in memory 804. Such instructions, also called computer instructions, software and program code, may be read into memory 804 from another computer-readable medium such as storage device 808 or network link 878. Execution of the sequences of instructions contained in memory 804 causes processor 802 to perform one or more of the method steps described herein.

It is understood that the present invention may be embodied in many different forms and should not be construed as being limited to the embodiments set forth herein. Rather, these embodiments are provided so that this invention will be thorough and complete and will fully convey the invention to those skilled in the art. Indeed, the invention is intended to cover alternatives, modifications and equivalents of these embodiments, which are included within the scope of the invention as defined by the appended claims. Furthermore, in the following detailed description of the present invention, numerous specific details are set forth in order to provide a thorough understanding of the present invention. However, it will be clear to those of ordinary skill in the art that the present invention may be practiced without such specific details.

Aspects of the present disclosure are described herein with reference to flowchart illustrations and/or block diagrams of methods, apparatuses (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable instruction execution apparatus, create a mechanism for implementing the functions/acts specified in the flowchart and/or block diagram block or blocks.

The computer-readable non-transitory media includes all types of computer readable media, including magnetic storage media, optical storage media, and solid state storage media and specifically excludes signals. It should be understood that the software can be installed in and sold with the device. Alternatively the software can be obtained and loaded into the device, including obtaining the software via a disc medium or from any manner of network or distribution system, including, for example, from a server owned by the software creator or from a server not owned but used by the software creator. The software can be stored on a server for distribution over the Internet, for example.

Computer-readable storage media (medium) exclude (excludes) propagated signals per se, can be accessed by a computer and/or processor(s), and include volatile and non-volatile internal and/or external media that is removable and/or non-removable. For the computer, the various types of storage media accommodate the storage of data in any suitable digital format. It should be appreciated by those skilled in the art that other types of computer readable medium can be employed such as zip drives, solid state drives, magnetic tape, flash memory cards, flash drives, cartridges, and the like, for storing computer executable instructions for performing the novel methods (acts) of the disclosed architecture.

The terminology used herein is for the purpose of describing particular aspects only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The description of the present invention has been presented for purposes of illustration and description, but is not intended to be exhaustive or limited to the disclosure in the form disclosed. Many modifications and variations will be apparent to those of ordinary skill in the art without departing from the scope of the invention as defined in the attaches set of claims. The aspects of the disclosure herein were chosen and described in order to best explain the principles of the invention and the practical application, and to enable others of ordinary skill in the art to understand the invention with various modifications as are suited to the particular use contemplated.

For purposes of this document, each process associated with the disclosed technology may be performed continuously and by one or more computing devices. Each step in a process may be performed by the same or different computing devices as those used in other steps, and each step need not necessarily be performed by a single computing device.

Although the invention has been described in language specific to structural features and/or methodological acts, it is to be understood that the invention defined in the appended claims is not necessarily limited to the specific features or acts described above. Rather, the specific features and acts described above are disclosed as example forms of implementing the claims.

## Claims

1.   A computer-implemented method for head pose and gaze angle estimation, comprising:

generating a dataset comprising a plurality of 2D face images (202A, 602), each 2D face image (602) including an eye region (310, 610), a head pose and gaze angle, as training data; comprising:

inputting (202, 402) a two-dimensional, 2D, face image (202A) into a face alignment method to generate (206, 404) a facial UV texture image (206A, 410A);
replacing (410) an eye region (310) in the facial UV texture image (206A, 410A) to generate a modified facial UV texture image;

reconstructing (216) the modified facial UV texture image to generate a modified 2D face image, and storing the modified 2D face image as training data in a database (140); and

estimating (218) the head pose and gaze angles by training a second neural network with the training data, wherein the second neural network comprises a multimodal convolution neural network, CNN (600), for simultaneous head pose and gaze angle estimating, the training of the second neural network including:

collecting the training data from the database (140), comprising:

receiving a 2D face image (602) and a corresponding eye region (310, 610) of the 2D face image (602); and

providing the 2D face image (602) to stacked first convolution layers (604A) of the CNN (600), and providing the corresponding eye region (310, 610) to stacked second convolution layers (604B) of the CNN (600), where the first convolution layers (604A) and the second convolution layers (604B) are stacked separately; and

simultaneously applying one or more transformations to the modified 2D face images and a corresponding eye region (310, 610) of the modified 2D face images of the training data, comprising:

simultaneously extracting, by each convolutional layer (604A, 604B) of the CNN (600), deeper features based on input features provided by a previous layer of the first convolution layers (604A) and the second convolution layers (604B), thereby learning feature representations of the 2D face image (602) and eye region (310, 610), respectively; and

flattening the extracted features, comprising head pose features and eye gaze features, from each input, and merging the flattened features as input into fully connected layers (606) of the CNN (600) to estimate a head pose angle (608A) and gaze angle (608B) of the 2D face image (602) received from the database (140).

2. The computer-implemented method of claim 1, wherein generating the dataset specifically comprises:

training a first neural network with a plurality of 2D face images (202A) to decouple movement of the head and eyes of the 2D face, wherein the first neural network is an encoder-decoder type neural network to map the 2D face image (202A) to a corresponding position map, the training of the first network including:

mapping (204) a 2D face with a known head pose from the plurality of 2D face images (202A) to a facial UV position image (204A), and

constructing (206) the facial UV texture image (206A, 410A) of the 2D face based on the facial UV position image (204A);

storing (212) a first eye UV texture image (306A), including gaze angles, extracted from the facial UV texture image (206A, 410A) of the 2D face in the database (140); and

replacing (214) the eye region (310) of the facial UV texture image (206A, 410A) with a second eye UV texture image (306A), including the gaze angles, stored in the database (140) to generate the modified facial UV texture image;

wherein the modified 2D face image stored as training data in the database (140) includes a modified head pose and gaze angle.

3. The computer-implemented method of claim 2, wherein

the mapping further includes mapping the 2D face in the plurality of 2D face images (202A) to a position map using the face alignment method, where the facial UV position image (204A) aligns the 2D face in the plurality of 2D face images (202A) to 3D coordinates of a reconstructed 3D model for the 2D face in the plurality of 2D face images (202A); and

the constructing further includes constructing, based on the facial UV position image (204A) or a face 3D morphable model, the facial UV texture image (206A, 410A) for the 2D face in the plurality of 2D face images (202A) to indicate a texture of the aligned 2D face.

4. The computer-implemented method of claim 2, wherein the storing further includes:

   extracting the facial UV texture image from the 2D face in the plurality of 2D face images (202A) based on the facial UV position image (204A);
   cropping the eye region (310) from the facial UV texture image (206A, 410A) to create a cropped eye UV texture image (306A) based on landmarks from the aligned 2D face in the plurality of 2D face images (202A); and
   storing the cropped eye UV texture image (306A) into the database (140, 308A).

5. The computer-implemented method of claim 4, wherein the cropped eye UV texture image is labelled as a difference between the head pose and the gaze angle of the 2D face in the plurality of 2D face images (202A).

6. The computer-implemented method of claim 4 or 5, wherein the replacing further includes:

   selecting the eye region (310) from the cropped eye UV texture image (306A) based on the landmarks from the database (140, 308A); and
   replacing the eye region (310) in the facial UV texture image (206A, 410A) with the cropped eye UV texture image (306A) from the database based on aligned coordinates of the landmarks to generate a modified facial texture map (412A) of the 2D face in the plurality of 2D face images (202A).

7. The computer-implemented method of any one of claims 4-6, wherein the replacing further includes:

   applying image fusion to merge the cropped eye UV texture image (306A) selected from the database (140, 308A) into the modified facial texture map (412A) of the 2D face in the plurality of 2D face images (202A); and
   training a generative adversarial network (GAN) or using a local gradient information-based method to smooth color and texture in the eye region (310, 610) of the modified facial UV texture image.

8. The computer-implemented method of any one of claims 2-7, further comprising:

   warping the modified facial UV texture image of the 2D face onto a 3D face morphable model, 3DMM, to reconstruct a 3D face model with the gaze direction from the modified facial UV texture image;
   applying a rotation matrix to the reconstructed 3D face model to change the head pose, and changing the gaze angles to be consistent with the head pose;
   projecting the 3D face model after application of the rotation matrix to a 2D image space to generate the modified 2D face image; and
   storing the modified 2D face image in the database (140).

9. The computer-implemented method of claim 7, wherein the gaze direction is calculated by adding a relative gaze direction stored in the cropped eye UV texture image (306A) selected from the database (140, 308A) to the head pose.

10. The computer-implemented method of any one of claims 1-9, wherein the estimating further includes:

    collecting 2D face images (202A) of a driver of a vehicle with one or more head poses to generate a driver dataset; and
    applying the driver dataset to fine-tune the second neural network to estimate the head pose and gaze angle estimation of the driver.

11. The computer-implemented method of claim 10, wherein the 2D face images (202A) of the driver are captured with a capture device and uploaded to a network for processing; and the processed 2D face images of the driver are downloaded to the vehicle.

12. The computer-implemented method of claim 3, wherein in the facial UV position image (204A), RGB gray-values at each pixel indicate 3D coordinates of the corresponding facial point in its reconstructed 3D model.

13. A device for head pose and gaze angle estimation, comprising:

    a non-transitory memory storage comprising instructions; and
    one or more processors in communication with the memory, wherein the one or more processors execute the instructions to: carry out the steps of the method of any one of claims 1 to 12.

**14.** A non-transitory computer-readable medium storing computer instructions for head pose and gaze angle estimation, that when executed by one or more processors, cause the one or more processors to perform the steps of the method of any one of claims 1 to 12.

**15.** A computer program product when executed by a processor, cause the processor to carry out the steps of the method of any one of claims 1 to 12.

**Patentansprüche**

**1.** Computerimplementiertes Verfahren zur Schätzung der Kopfhaltung und des Blickes, umfassend:
Generieren eines Datensatzes, umfassend eine Vielzahl von 2D-Gesichtsbildern (202A, 602), wobei jedes 2D-Gesichtsbild (602) einen Augenbereich (310, 610), einen Kopfhaltungs- und Blickwinkel beinhaltet, als Trainingsdaten; umfassend:

Eingeben (202, 402) eines zweidimensionalen Gesichtsbildes, 2D-Gesichtsbild, (202A) in ein Gesichtsausrichtungsverfahren, um ein UV-Texturbild (206A, 410A) des Gesichts zu generieren (206, 404);
Ersetzen (410) eines Augenbereichs (310) in dem UV-Texturbild (206A, 410A) des Gesichts, um ein modifiziertes UV-Texturbild des Gesichts zu generieren;
Rekonstruieren (216) des modifizierten UV-Texturbildes des Gesichts, um ein modifiziertes 2D-Gesichtsbild zu generieren, und
Speichern des modifizierten 2D-Gesichtsbildes als Trainingsdaten in einer Datenbank (140); und
Schätzen (218) der Kopfhaltungs- und Blickwinkel durch Trainieren eines zweiten neuralen Netzwerks mit den Trainingsdaten, wobei das zweite neurale Netzwerk ein multimodales neurales Faltungsnetzwerk, CNN (600), zum gleichzeitigen Schätzen der Kopfhaltungs- und Blickwinkel umfasst, wobei das Training des zweiten neuralen Netzwerks Folgendes beinhaltet:
Sammeln der Trainingsdaten aus der Datenbank (140), umfassend:

Empfangen eines 2D-Gesichtsbildes (602) und eines entsprechenden Augenbereichs (310, 610) des 2D-Gesichtsbildes (602); und
Bereitstellen des 2D-Gesichtsbildes (602) für gestapelte erste Faltungsschichten (604A) des CNN (600) und Bereitstellen des entsprechenden Augenbereichs (310, 610) für gestapelte zweite Faltungsschichten (604B) des CNN (600), wobei die ersten Faltungsschichten (604A) und die zweiten Faltungsschichten (604B) separat gestapelt sind; und
gleichzeitiges Anwenden einer oder mehrerer Transformationen auf die modifizierten 2D-Gesichtsbilder und einen entsprechenden Augenbereich (310, 610) der modifizierten 2D-Gesichtsbilder der Trainingsdaten, umfassend:

gleichzeitiges Extrahieren von tieferen Merkmalen durch jede Faltungsschicht (604A, 604B) des CNN (600) basierend auf den Eingangsmerkmalen, die durch eine vorherige Schicht der ersten Faltungsschichten (604A) und der zweiten Faltungsschichten (604B) bereitgestellt werden, dadurch Lernen von Merkmalsdarstellungen des 2D-Gesichtsbildes (602) bzw. des Augenbereichs (310, 610); und
Abflachen der extrahierten Merkmale, umfassend Kopfhaltungsmerkmale und Augen-Blick-Merkmale aus jeder Eingabe, und Zusammenführen der abgeflachten Merkmale als Eingabe in vollständig verbundene Schichten (606) des CNN (600), um einen Kopfhaltungswinkel (608A) und einen Blickwinkel (608B) des 2D-Gesichtsbildes (602), das aus der Datenbank (140) empfangen wird, zu schätzen.

**2.** Computerimplementiertes Verfahren nach Anspruch 1, wobei das Generieren des Datensatzes speziell Folgendes umfasst:
Trainieren eines ersten neuralen Netzwerks mit einer Vielzahl von 2D-Gesichtsbildern (202A), um eine Bewegung des Kopfes und der Augen des 2D-Gesichts zu entkoppeln, wobei das erste neurale Netzwerk ein neurales Netzwerk vom Codierer-Decodierer-Typ ist, um das 2D-Gesichtsbild (202A) auf einer entsprechenden Positionskarte abzubilden, wobei das Trainieren des ersten Netzwerks Folgendes beinhaltet:

Abbilden (204) eines 2D-Gesichts mit einer bekannten Kopfhaltung aus der Vielzahl von 2D-Gesichtsbildern (202A) auf einem UV-Positionsbild (204A) des Gesichts, und
Konstruieren (206) des UV-Texturbildes (206A, 410A) des Gesichts von dem 2D-Gesicht basierend auf dem UV-Positionsbild (204A) des Gesichts;

Speichern (212) eines ersten UV-Texturbildes (306A) der Augen, das Blickwinkel beinhaltet, die aus dem UV-Texturbild (206A, 410A) des Gesichts von dem 2D-Gesicht in der Datenbank (140) extrahiert werden; und Ersetzen (214) des Augenbereichs (310) des UV-Texturbildes (206A, 410A) des Gesichts durch ein zweites UV-Texturbild (306A) der Augen, das Blickwinkel beinhaltet, die in der Datenbank (140) gespeichert sind, um das modifizierte UV-Texturbild des Gesichts zu generieren;

wobei das modifizierte 2D-Gesichtsbild, das als Trainingsdaten in der Datenbank (140) gespeichert ist, einen modifizierten Kopfhaltungs- und Blickwinkel beinhaltet.

3. Computerimplementiertes Verfahren nach Anspruch 2, wobei

das Abbilden ferner das Abbilden des 2D-Gesichts in der Vielzahl von 2D-Gesichtsbildern (202A) auf einer Positionskarte unter Verwendung des Gesichtsausrichtungsverfahrens beinhaltet, wobei das UV-Positionsbild (204A) des Gesichts das 2D-Gesicht in der Vielzahl von 2D-Gesichtsbildern (202A) auf 3D-Koordinaten eines rekonstruierten 3D-Modells für das 2D-Gesicht in der Vielzahl von 2D-Gesichtsbildern (202A) ausrichtet; und das Konstruieren ferner das Konstruieren des UV-Texturbildes (206A, 410A) des Gesichts für das 2D-Gesicht in der Vielzahl von 2D-Gesichtsbildern (202A) basierend auf dem UV-Positionsbild (204A) des Gesichts oder einem 3D-morphbaren Gesichtsmodell beinhaltet, um eine Textur des ausgerichteten 2D-Gesichts anzuzeigen.

4. Computerimplementiertes Verfahren nach Anspruch 2, wobei das Speichern ferner Folgendes beinhaltet:

Extrahieren des UV-Texturbildes des Gesichts aus dem 2D-Gesicht in der Vielzahl von 2D-Gesichtsbildern (202A) basierend auf dem UV-Positionsbild (204A) des Gesichts;
Ausschneiden des Augenbereichs (310) aus dem UV-Texturbild (206A, 410A) des Gesichts, um ein ausgeschnittenes UV-Texturbild (306A) der Augen basierend auf den Orientierungspunkten aus dem ausgerichteten 2D-Gesicht in der Vielzahl von 2D-Gesichtsbildern (202A) zu erstellen; und
Speichern des ausgeschnittenen UV-Texturbildes (306A) der Augen in die Datenbank (140, 308A).

5. Computerimplementiertes Verfahren nach Anspruch 4, wobei das ausgeschnittene UV-Texturbild der Augen als eine Differenz zwischen der Kopfhaltung und dem Blickwinkel des 2D-Gesichts in der Vielzahl von 2D-Gesichtsbildern (202A) gekennzeichnet ist.

6. Computerimplementiertes Verfahren nach Anspruch 4 oder 5, wobei das Ersetzen ferner Folgendes beinhaltet:

Auswählen des Augenbereichs (310) aus dem ausgeschnittenen UV-Texturbild (306A) der Augen basierend auf den Orientierungspunkten aus der Datenbank (140, 308A); und
Ersetzen des Augenbereichs (310) in dem UV-Texturbild (206A, 410A) des Gesichts durch das ausgeschnittene UV-Texturbild (306A) der Augen aus der Datenbank basierend auf ausgerichteten Koordinaten der Orientierungspunkte, um eine modifizierte Texturkarte (412A) des Gesichts von dem 2D-Gesicht in der Vielzahl von 2D-Gesichtsbildern (202A) zu generieren.

7. Computerimplementiertes Verfahren nach einem der Ansprüche 4-6, wobei das Ersetzen ferner Folgendes beinhaltet:

Anwenden einer Bildfusion, um das ausgeschnittene UV-Texturbild (306A) der Augen, das aus der Datenbank (140, 308A) ausgewählt wird, in die modifizierte Texturkarte (412A) des Gesichts von dem 2D-Gesicht in der Vielzahl von 2D-Gesichtsbildern (202A) einzubinden; und
Trainieren eines generativen adversen Netzwerks (GAN) oder Verwenden eines auf lokalen Gradienteninformationen basierenden Verfahrens, um Farbe und Textur in dem Augenbereich (310, 610) des modifizierten UV-Texturbildes des Gesichts zu glätten.

8. Computerimplementiertes Verfahren nach einem der Ansprüche 2-7, ferner umfassend:

Verziehen des modifizierten UV-Texturbildes des Gesichts von dem 2D-Gesicht auf ein morphbares 3D-Gesichtsmodell, 3DMM, um ein 3D-Gesichtsmodell mit der Blickrichtung aus dem modifizierten UV-Texturbild des Gesichts zu rekonstruieren;
Anwenden einer Rotationsmatrix auf das rekonstruierte 3D-Gesichtsmodell, um die Kopfhaltung zu ändern, und Ändern der Blickwinkel, damit sie mit der Kopfhaltung konsistent sind;
Projizieren des 3D-Gesichtsmodells nach Anwendung der Rotationsmatrix auf einen 2D-Bildraum, um das modifizierte 2D-Gesichtsbild zu generieren; und

Speichern des modifizierten 2D-Gesichtsbildes in einer Datenbank (140).

9. Computerimplementiertes Verfahren nach Anspruch 7, wobei die Blickrichtung durch Addieren einer relativen Blickrichtung, die in dem ausgeschnittenen UV-Texturbild (306A) der Augen, das aus der Datenbank (140, 308A) ausgewählt wird, gespeichert ist, zu der Kopfhaltung berechnet wird.

10. Computerimplementiertes Verfahren nach einem der Ansprüche 1-9, wobei das Schätzen ferner Folgendes beinhaltet:

Sammeln von 2D-Gesichtsbildern (202A) eines Fahrers eines Fahrzeugs mit einer oder mehreren Kopfhaltungen, um einen Fahrerdatensatz zu generieren; und

Anwenden des Fahrerdatensatzes, um das zweite neurale Netzwerk zum Schätzen der Kopfhaltungs- und der Blickwinkelschätzung des Fahrers feinabzustimmen.

11. Computerimplementiertes Verfahren nach Anspruch 10, wobei die 2D-Gesichtsbilder (202A) des Fahrers mit einer Erfassungsvorrichtung erfasst werden und zur Verarbeitung in ein Netzwerk hochgeladen werden; und die verarbeiteten 2D-Gesichtsbilder des Fahrers in das Fahrzeug heruntergeladen werden.

12. Computerimplementiertes Verfahren nach Anspruch 3, wobei die RGB-Grauwerte an jedem Pixel in dem UV-Positionsbild (204A) des Gesichts 3D-Koordinaten des entsprechenden Gesichtspunkts in seinem rekonstruierten 3D-Modell angeben.

13. Vorrichtung zur Schätzung der Kopfhaltungs- und Blickwinkel, umfassend:

einen nicht-transitorischen Speicher, umfassend Anweisungen; und

einen oder mehrere Prozessoren, die mit dem Speicher in Kommunikation stehen, wobei der eine oder die mehreren Prozessoren die Anweisungen ausführen, um: die Schritte des Verfahrens nach einem der Ansprüche 1 bis 12 durchzuführen.

14. Nicht-transitorisches computerlesbares Medium, das Computeranweisungen zur Schätzung der Kopfhaltungs- und Blickwinkel speichert, die bei Ausführung durch einen oder mehrere Prozessoren bewirken, dass der eine oder die mehreren Prozessoren die Schritte des Verfahrens nach einem der Ansprüche 1 bis 12 durchführen.

15. Computerprogrammprodukt, das bei Ausführung durch einen Prozessor bewirkt, dass der Prozessor die Schritte des Verfahrens nach einem der Ansprüche 1 bis 12 durchführt.

**Revendications**

1. Procédé mis en œuvre par ordinateur pour l'estimation de pose de tête et d'angle de gaze, comprenant :

la génération d'un ensemble de données comprenant une pluralité d'images de visage 2D (202A, 602), chaque image de visage 2D (602) comportant une région oculaire (310, 610), une pose de tête et un angle de gaze, en tant que données d'entraînement ;

comprenant :

la saisie (202, 402) d'une image de visage bidimensionnelle, 2D (202A), dans un procédé d'alignement de visage pour générer (206, 404) une image de texture d'UV faciaux (206A, 410A) ;

le remplacement (410) d'une région oculaire (310) dans l'image de texture d'UV faciaux (206A, 410A) pour générer une image de texture d'UV faciaux modifiée ;

la reconstruction (216) de l'image de texture d'UV faciaux modifiée pour générer une image de visage 2D modifiée, et

le stockage de l'image de visage 2D modifiée en tant que données d'entraînement dans une base de données (140) ; et

l'estimation (218) de la pose de tête et des angles de gaze par l'entraînement d'un second réseau neuronal avec les données d'entraînement, dans lequel le second réseau neuronal comprend un réseau neuronal à convolution multimodale, CNN (600), pour l'estimation simultanée de pose de tête et d'angle de gaze, l'entraînement du second réseau neuronal comportant :
la collecte des données d'entraînement à partir de la base de données (140), comprenant :

la réception d'une image de visage 2D (602) et d'une région oculaire correspondante (310, 610) de l'image de visage 2D (602) ; et
la fourniture de l'image de visage 2D (602) aux premières couches de convolution empilées (604A) du CNN (600), et la fourniture de la région oculaire correspondante (310, 610) aux secondes couches de convolution empilées (604B) du CNN (600), où les premières couches de convolution (604A) et les secondes couches de convolution (604B) sont empilées séparément ; et
l'application simultanée d'une ou plusieurs transformations aux images de visage 2D modifiées et à une région oculaire correspondante (310, 610) des images de visage 2D modifiées des données d'entraînement, comprenant :

l'extraction simultanée, par chaque couche convolutionnelle (604A, 604B) du CNN (600), de caractéristiques plus profondes sur la base de caractéristiques d'entrée fournies par une couche précédente des premières couches de convolution (604A) et des secondes couches de convolution (604B), apprenant ainsi des représentations de caractéristiques de l'image de visage 2D (602) et de la région oculaire (310, 610), respectivement ; et
l'aplatissement des caractéristiques extraites, comprenant des caractéristiques de pose de tête et des caractéristiques de gaze oculaire, à partir de chaque entrée, et l'intégration des caractéristiques aplaties en tant qu'entrée dans des couches entièrement connectées (606) du CNN (600) pour estimer un angle de pose de tête (608A) et un angle de gaze (608B) de l'image de visage 2D (602) reçue de la base de données (140).

2. Procédé mis en œuvre par ordinateur selon la revendication 1, dans lequel la génération de l'ensemble de données comprend spécifiquement :
l'entraînement d'un premier réseau neuronal avec une pluralité d'images de visage 2D (202A) dissocier le mouvement de la tête et des yeux du visage 2D est découplé, dans lequel le premier réseau neuronal est un réseau neuronal de type encodeur-décodeur pour mapper l'image de visage 2D (202A) à une carte de position correspondante, l'entraînement du premier réseau comportant :

le mappage (204) d'un visage 2D avec une pose de tête connue à partir de la pluralité d'images de visage 2D (202A) à une image de position d'UV faciaux (204A), et
la construction (206) de l'image de texture d'UV faciaux (206A, 410A) du visage 2D sur la base de l'image de position d'UV faciaux (204A) ;
le stockage (212) d'une première image de texture d'UV oculaires (306A), comportant des angles de gaze, extraite de l'image de texture d'UV faciaux (206A, 410A) du visage 2D dans la base de données (140) ; et
le remplacement (214) de la région oculaire (310) de l'image de texture d'UV faciaux (206A, 410A) par une seconde image de texture d'UV oculaires (306A), comportant les angles de gaze, stockée dans la base de données (140) pour générer l'image de texture d'UV faciaux modifiée ;
dans lequel l'image de visage 2D modifiée stockée en tant que données d'entraînement dans la base de données (140) comporte une pose de tête et un angle de gaze modifiés.

3. Procédé mis en œuvre par ordinateur selon la revendication 2, dans lequel

le mappage comporte également le mappage du visage 2D dans la pluralité d'images de visage 2D (202A) à une carte de position à l'aide du procédé d'alignement de visages, où l'image de position d'UV faciaux (204A) aligne le visage 2D dans la pluralité d'images de visage 2D (202A) sur des coordonnées 3D d'un modèle 3D reconstruit pour le visage 2D dans la pluralité d'images de visage 2D (202A) ; et
la construction comporte également la construction, sur la base de l'image de position d'UV faciaux (204A) ou d'un modèle morphable 3D de visage, de l'image de texture d'UV faciaux (206A, 410A) pour le visage 2D dans la pluralité d'images de visage 2D (202A) pour indiquer une texture du visage 2D aligné.

4. Procédé mis en œuvre par ordinateur selon la revendication 2, dans lequel le stockage comporte également :

l'extraction de l'image de texture d'UV faciaux du visage 2D dans la pluralité d'images de visage 2D (202A) sur la base de l'image de position d'UV faciaux (204A) ;
le rognage de la région oculaire (310) à partir de l'image de texture d'UV faciaux (206A, 410A) pour créer une image de texture d'UV oculaires rognée (306A) sur la base de points de repère du visage 2D aligné dans la pluralité d'images de visage 2D (202A) ; et

le stockage de l'image de texture d'UV oculaires rognée (306A) dans la base de données (140, 308A).

5. Procédé mis en œuvre par ordinateur selon la revendication 4, dans lequel l'image de texture d'UV oculaires rognée est étiquetée comme une différence entre la pose de tête et l'angle de gaze du visage 2D dans la pluralité d'images de visage 2D (202A).

6. Procédé mis en œuvre par ordinateur selon la revendication 4 ou 5, dans lequel le remplacement comporte également :

la sélection de la région oculaire (310) à partir de l'image de texture d'UV oculaires rognée (306A) sur la base des points de repère de la base de données (140, 308A) ; et

le remplacement de la région oculaire (310) dans l'image de texture d'UV faciaux (206A, 410A) par l'image de texture d'UV faciaux rognée (306A) de la base de données sur la base de coordonnées alignées des points de repère pour générer une carte de texture faciale modifiée (412A) du visage 2D dans la pluralité d'images de visage 2D (202A).

7. Procédé mis en œuvre par ordinateur selon l'une quelconque des revendications 4 à 6, dans lequel le remplacement comporte également :

l'application d'une fusion d'images pour intégrer l'image de texture d'UV oculaires rognée (306A) sélectionnée dans la base de données (140, 308A) dans la carte de texture faciale modifiée (412A) du visage 2D dans la pluralité d'images de visage 2D (202A) ; et

l'entraînement d'un réseau antagoniste génératif (GAN) ou l'utilisation d'un procédé basé sur des informations de gradient local pour lisser la couleur et la texture dans la région oculaire (310, 610) de l'image de texture d'UV faciaux modifiée.

8. Procédé mis en œuvre par ordinateur selon l'une quelconque des revendications 2 à 7, comprenant également :

la déformation de l'image de texture d'UV faciaux modifiée du visage 2D sur un modèle morphable de visage 3D, 3DMM, pour reconstruire un modèle de visage 3D avec la direction de gaze à partir de l'image de texture d'UV faciaux modifiée ;

appliquer une matrice de rotation au modèle de visage 3D reconstruit pour modifier la pose de tête, et modifier les angles de gaze pour qu'ils soient cohérents avec la pose de tête ;

la projection du modèle de visage 3D après application de la matrice de rotation à un espace image 2D pour générer l'image de visage 2D modifiée ; et

le stockage de l'image de visage 2D modifiée dans la base de données (140).

9. Procédé mis en œuvre par ordinateur selon la revendication 7, dans lequel la direction de gaze est calculée par l'ajout d'une direction de gaze relative stockée dans l'image de texture d'UV oculaires rognée (306A) sélectionnée dans la base de données (140, 308A) à la pose de tête.

10. Procédé mis en œuvre par ordinateur selon l'une quelconque des revendications 1 à 9, dans lequel l'estimation comporte également :

la collecte d'images de visage 2D (202A) d'un conducteur d'un véhicule avec une ou plusieurs poses de tête pour générer un ensemble de données de conducteur ; et

l'application de l'ensemble de données de conducteur pour affiner le second réseau neuronal pour estimer l'estimation de la pose de tête et de l'angle de gaze du conducteur.

11. Procédé mis en œuvre par ordinateur selon la revendication 10, dans lequel les images de visage 2D (202A) du conducteur sont capturées avec un dispositif de capture et téléchargées sur un réseau pour traitement ; et les images de visage 2D traitées du conducteur sont téléchargées sur le véhicule.

12. Procédé mis en œuvre par ordinateur selon la revendication 3, dans lequel dans l'image de position d'UV faciaux (204A), les valeurs de gris RVB à chaque pixel indiquent des coordonnées 3D du point facial correspondant dans son modèle 3D reconstruit.

**13.** Dispositif d'estimation de pose de tête et d'angle de gaze, comprenant :

une mémoire de stockage non transitoire comprenant des instructions ; et
un ou plusieurs processeurs en communication avec la mémoire, dans lequel les un ou plusieurs processeurs exécutent les instructions pour : effectuer les étapes du procédé selon l'une quelconque des revendications 1 à 12.

**14.** Support non transitoire lisible par ordinateur stockant des instructions informatiques pour l'estimation de pose de tête et d'angle de gaze, qui, lorsqu'elles sont exécutées par un ou plusieurs processeurs, amènent les un ou plusieurs processeurs à réaliser les étapes du procédé selon l'une quelconque des revendications 1 à 12.

**15.** Produit de programme informatique, qui lorsqu'il est exécuté par un processeur, amène le processeur à effectuer les étapes du procédé selon l'une quelconque des revendications 1 à 12.

100

101

105

103

102

Head Pose and
Gaze Estimator
106

Comm Network(s)
130

Database(s)
140

*FIG. 1A*

EP 3 956 807 B1

**Driver Distraction System 106**

**Capture Device 103**

| Sensor 103A | Camera 103B | Mircophone 103C | Depth Sensor 103D |

Machine Learning Engine 109

**Processor(s) 108**

Detection and Tracking 108A

Head Pose Estimator 108B

Gaze Direction Estimator 108C

Image Corrector 108D

Video Enhancer 108E

Video Scene Analyzer 108F

Vehicle System 104

Sensors 105

Navigation System 107

I/O Interface 114

Memory 116

Visual/Audio Alert 118

Communication Device 120

Database 140

*FIG. 1B*

200

210

Using a face alignment method to generate a facial UV position and texture image

212

Store an aligned eye UV texture image, with gaze angles, in a database

214

Replace an eye region of an aligned facial UV texture image with the eye UV texture image

216

Reconstruct a modified facial UV texture image in 3D space and then generate a modified face image in 2D space

218

Estimate a head pose and gaze angle of a person

FIG. 2A

FIG. 2B

Coincident Origin Head Pose and Gaze 205'

Gaze

Head Pose

(h,v)'

(α1,β1,γ1)'

camera

Origin Head Pose 203'

Origin Gaze 201'

Gaze

Head Pose

(h,v)'

(α1,β1,γ1)'

camera

EP 3 956 807 B1

```
┌─────────────────────┐          DNN      ╱─────────────────────╲      ╱─────────────────────╲
│                     │          203     ╱                       ╲    ╱                       ╲
│  Input 2D face Image│─────────────────▶   Generate facial      ──▶    Construct facial
│        202          │                 │   UV position image    │   │  UV texture image     │
│                     │                  ╲       204            ╱     ╲       206           ╱
└─────────────────────┘                   ╲─────────────────────╲      ╲─────────────────────╲
```

## FIG. 2C

Head Pose Image
202A

DNN
203

UV position image
204A

UV texture image
206A

## FIG. 2D

| Repeat Steps 202 – 206 for each 2D face image with known head pose and gaze angles | → | Extract facial UV texture image 304 | → | Crop eye region from facial UV texture image 306 | → | Store cropped eye texture image into database 308 |

**FIG. 3A**

302A → 304A / 306A / 310 → 308A

**FIG. 3B**

Input 2D face image
402 (Step 202)

Eye UV texture image in database
408 (Step 308)

Generate facial UV
position and facial UV
texture images
404 (Steps 204 and 206)

Crop eye region from
facial UV texture image
based on landmarks
406 (Step 306)

Replace eye region in
facial UV texture image
with sample from
database
410

Output modified facial UV texture
image 412

## FIG. 4A

306A

412A          410A

## FIG. 4B

FIG. 5A

3DMM face model
502

Modified facial
UV texture
504 (from step 412)

3D face model
reconstruction
506

Rotate
reconstructed
3D face model
508

Project 3D
face model
back to 2D
image space
510

FIG. 5B

Yaw α

Pitch β

Roll γ

512

FIG. 6

**FIG. 7A**

**FIG. 7B**

32

*FIG. 8*

800

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018184140 A1
- US 2018181809 A1

**Non-patent literature cited in the description**

- **FENG**. *Joint 3D Face Reconstruction and Dense Alignment with Position Map Regression Network*
- **RASKAR**. *Image Fusion for Context Enhancement and Video Surrealism*
- **ZHU**. *Face alignment across large poses: a 3D solution*
- **ZHANG**. *Appearance-based gaze estimation in the wild*
- **BULAT**. *How far are we from solving the 2d & 3d face alignment problem? (and a dataset of 230,000 3d facial landmarks)*